# EUROPEAN PATENT SPECIFICATION

(11) **EP 4 084 184 B1**
(45) Date of publication and mention of the grant of the patent: **05.02.2025**
(21) Application number: 20904827.1
(22) Date of filing: 15.12.2020
(51) Int. Cl.: H01M 4/04, H01M 10/0525, H01M 10/0587, H01M 10/0565, H01M 10/04, H01M 50/46, H01M 10/0566, H01M 10/0563, H01M 10/0585, H01M 10/052, H01M 4/13

(54) **SECONDARY BATTERY AND PRODUCTION METHOD FOR SAME**
SEKUNDÄRBATTERIE UND HERSTELLUNGSVERFAHREN DAFÜR
BATTERIE SECONDAIRE ET SON PROCÉDÉ DE PRODUCTION

(30) Priority: 26.12.2019 JP 2019236097
(43) Date of publication of application: 02.11.2022
(73) Proprietor: SANYO Electric Co., Ltd., Daito-shi Osaka 574-8534 (JP)
(72) Inventor: KUSADA, Hideo, Osaka-shi, Osaka 540-6207 (JP); TSUKAGOSHI, Takafumi, Osaka-shi, Osaka 540-6207 (JP)
(74) Representative: Novagraaf International SA
(86) International application number: PCT/JP2020/046639
(87) International publication number: WO 2021/131877

(56) References cited:
- EP-A1- 3 352 248
- WO-A1-2018/207530
- WO-A1-2019/156172
- WO-A1-99/26306
- JP-A- 2011 054 502
- JP-A- 2013 243 070
- JP-A- 2014 026 943
- JP-A- 2014 120 456
- JP-A- 2018 067 396
- US-A1- 2019 363 402

## Description

### TECHNICAL FIELD

The present disclosure relates to a secondary battery and a manufacturing method of a secondary battery.

### BACKGROUND ART

In recent years, the demand for secondary batteries has been increasing in a variety of situations. Among them, lithium ion secondary batteries using nonaqueous electrolytes have been attracting attention because of their high energy density. One form of such secondary batteries is disclosed in Patent Literature 1. In this form of the secondary battery, a flat electrode assembly consisting of a plurality of layers of positive electrode plates and negative electrode plates stacked via separators is inserted into an outer package. In the positive electrode plate, a positive electrode active material mixture layer is provided on both sides of a positive electrode core body. In the negative electrode plate, a negative electrode active material mixture layer is provided on both sides of a negative electrode core body. The negative electrode active material and the positive electrode active material have a structure capable of intercalation and deintercalation of lithium ions. The separators are made of a porous material that allows lithium ions to permeate, while preventing short-circuit caused by the electrical contact between the negative electrode plates and the positive electrode plates.

The negative electrode plates and the positive electrode plates are each electrically connected to a current collector plate and inserted into the outer package. The outer package is sealed after being filled with an electrolyte. To prevent direct contact between the positive electrode and the negative electrode due to shrinking of the separator, the secondary battery includes an adhesive layer on the surface of the separator to bond the positive electrode plate with the separator and the negative electrode plate with the separator by thermocompression bonding. Patent Literature 2 refers to a plurality of stack electrode assemblies, which include adhesive layers between an electrode active material layer and a separator. The aim of the document is to provide a non-aqueous electrolyte secondary battery having both ion permeability of a separator and adhesiveness between a separator and an electrode using a separator having a porous heat resistant layer formed on one surface thereof.

### CITATION LIST

PATENT LITERATURE 1: JP 2014-26943 A PATENT LITERATURE 2: WO 2018/207530 A

### SUMMARY

The inventors of the present application have discovered the following new issue. Specifically, when an adhesive material is provided between the electrodes and the separators to facilitate handling of the electrode assembly and to suppress positional misalignment, especially stacking misalignment, of the electrode plates during insertion of the stacked body into a sealing body, a liquid flowability (liquid permeability) of the electrolyte depends on the strength of adhesion.

In other words, when the adhesive strength is high, a density of the adhesive material increases and a gap between the electrode and the separator becomes narrower, so that the liquid flowability of the electrolyte may easily be impaired. On the other hand, when the adhesive strength is weak, the liquid flowability is good, but the handling of the electrode assembly is impaired, and the misalignment of the separators relative to the electrodes tends to occur easily.

The liquid flowability is described more in detail. Since the electrolyte permeates from the end portion of the electrode assembly in the stacking direction, the further away the electrode is from the end portion of the electrode assembly in the stacking direction, the harder it is for the electrolyte to permeate and the harder it is for the electrolyte to spread over the entire electrode surface. That is, the electrolyte tends to not permeate well as it moves to the center of the stacked body. This problem becomes especially noticeable in large-capacity secondary batteries which have the large electrode area and require a large amount of electrolyte between the electrodes. In such large-capacity secondary batteries, it takes time to spread enough electrolyte over the entire surfaces of the electrode assembly. Therefore, the adhesive, when used, may cause a significant drop in productivity especially in large-capacity secondary batteries.

Therefore, it is considered that the adhesive should have the minimum adhesive strength to achieve the purpose of ensuring good liquid flowability. However, such control of the adhesive strength may have a significant impact on the production takt time. Specifically, to make the entire stacked layer group have a uniform adhesive strength while keeping the adhesive strength inside the stacked layer group to a minimum, the temperature of the entire stacked body needs to be uniform at a relatively low temperature, when the adhesive material whose adhesive strength depends at least on heat and pressure is used, in order to suppress crush of the separators located on the outer side of the stacking direction by heat. This requires a lot of time for the heat pressing process.

The scope of the present invention is specified by claims 1 and 2. A secondary battery according to an embodiment of the present invention includes a plurality of first electrodes each including a first electrode core body and a first electrode active material disposed on the first electrode core body, a plurality of second electrodes each including a second electrode core body and a second electrode active material disposed on the second electrode core body, at least one separator, and an adhesive disposed between at least one side surface in a thickness direction of the separator and the first electrode, in which the plurality of the first electrodes and the plurality of the second electrodes are alternately stacked via the separator, at least ten first electrodes are included in a stacked body including the plurality of the first electrodes and the plurality of the second electrodes, and when an adhesive strength between the outermost first electrode and the separator is A0 [N/m], and an adhesive strength between the first electrode located in a center in a stacking direction of the stacked body and the separator is A1 [N/m], A1/A0 is at least 0.1 and less than 0.9.

The first electrode may be a positive electrode or a negative electrode. The stacked body is composed of, for example, an electrode group or an electrode assembly, and when an odd number of the first electrodes are stacked, there is only one first electrode in the center in the stacking direction, but when an even number of the first electrodes are stacked, there are two first electrodes in the center in the stacking direction. Also, there are two outermost first electrodes. The phrase: A1/A0 is at least 0.1, as mentioned above, means that the value of A1/A0 is at least 0.1 when the first electrode in the outermost layer and the first electrode in the center in the stacking direction, where the value of A1/A0 is the smallest, are selected. Similarly, the phrase: A1/A0 is less than 0.9 means that the value of A1/A0 is less than 0.9 when the first electrode of the outermost layer and the first electrode in the center in the stacking direction, where the value of A1/A0 is the largest, are selected.

A secondary battery according to another aspect of the present invention includes a wound assembly formed by winding at least five times, via a belt-like separator, a belt-like first electrode including a first electrode core body and a first electrode active material disposed on the first electrode core body, and a belt-like second electrode including a second electrode core body and a second electrode active material disposed on the second electrode core body, in which the wound assembly includes an adhesive disposed between at least one side surface of the separator in a thickness direction and the first electrode, and when an adhesive strength between the first electrode located at the outermost circumference and the separator is A0 [N/m] , and an adhesive strength between the first electrode located at the innermost circumference and the separator is A1 [N/m], A1/A0 is at least 0.1 and less than 0.9.

The first electrode may be a positive electrode or a negative electrode. Even when the secondary battery includes a wound electrode assembly, there is provided a stacked structure, if the electrode assembly is flat, in which the positive electrode, the negative electrode, and the separator are stacked with the separator placed between the positive electrode and the negative electrode at a local area where the electrodes are parallel to press plates that press the electrode assembly flat (the area sandwiched between a pair of press plates). Thus, such a local area where the press plates and the electrodes are parallel can be regarded as a stacked body even when the secondary battery includes a wound electrode assembly. In that case, the separator located on the innermost circumference side can be regarded as the inner (center) separator of the stacked body, and the separator located on the outermost circumference side can be regarded as the outer separator of the stacked body.

The secondary battery according to the present invention can easily shorten the cycle time while securing the necessary adhesive strength in the stacked body, and furthermore, achieving a good liquid flowability of an electrolyte in the stacked body. In addition, the secondary battery according to the present disclosure facilitates the manufacture of such a secondary battery.

### BRIEF DESCRIPTION OF DRAWINGS

FIG. 1 is a perspective view of a rectangular secondary battery according to an embodiment of the present disclosure.
FIG. 2 is a perspective view of an electrode assembly and a sealing plate that constitute the rectangular secondary battery according to the embodiment of the present disclosure.
FIG. 3 is an exploded perspective view of the electrode assembly of the rectangular secondary battery.
FIG. 4 is a schematic cross-sectional view taken along line A-A of FIG. 2.
FIG. 5 is an enlarged schematic cross-sectional view of a portion of the outer part of a first electrode group in the stacking direction when cut along a plane orthogonal to the height direction of the rectangular secondary battery, illustrating a portion of a separator, a portion of a negative electrode, and a bonded portion of an adhesive which will be described below.
FIG. 6 is a schematic diagram illustrating a relationship between the position in the stacking direction and the adhesive strength between the electrode and the separator in a stacked electrode assembly.
FIG. 7 is an enlarged schematic cross-sectional view of a portion of the inner part of the first electrode group in the stacking direction when cut along a plane orthogonal to the height direction, in which the portion of the adhesive that does not develop adhesive strength is omitted as in FIG. 5.
FIG. 8 is a plan view of a wound rectangular secondary battery according to another embodiment.
FIG. 9 is a front view of the wound rectangular secondary battery.
FIG. 10 (a) is a cross-sectional view taken along line A-A in FIG. 8, FIG. 10 (b) is a cross-sectional view taken along line B-B in FIG. 8, and FIG. 10 (c) is a cross-sectional view taken along line C-C of FIG. 10 (a).
FIG. 11A is a plan view of a positive electrode included in the a wound rectangular secondary battery.
FIG. 11B is a plan view of a negative electrode included in the wound rectangular secondary battery.
FIG. 12 is an exploded perspective view on the winding end side of a flat wound electrode assembly included in the wound rectangular secondary battery.
FIG. 13 is a schematic diagram with respect to the wound electrode assembly corresponding to FIG. 6.

### DESCRIPTION OF EMBODIMENTS

The present invention will be described in detail below with reference to the accompanying drawings. When multiple embodiments, modifications, and the like are included in the following, it is assumed from the outset that new embodiments may be constructed by combining their characteristic parts as appropriate. In the following examples, the same reference signs are assigned to the same components in the drawings, and their explanations are not repeated. Several drawings are schematic diagrams, and the dimensional ratios of length, width, height, and the like of individual components do not necessarily match between different diagrams. Among the components described below, the components that are not described in the independent claims that represent the highest concept are optional components and are not essential components. In the present specification, the phrase "from numerical value A to numerical value B" means "numerical value A or higher and numerical value B or lower". Also, in the following description, the height direction of an outer can 14, 140 represents the "vertical direction" of a secondary battery 10, 110, the sealing plate 15, 123 side represents the "upper" direction, and the bottom side of the outer can 14, 140 side represents the "lower" direction. The direction along the longitudinal direction of the sealing plate 15, 123 represents the "horizontal direction" of the secondary battery 10, 110.

When the first electrode is either the positive electrode or the negative electrode, and the secondary battery includes a stacked electrode assembly, the stacked body is composed of, for example, an electrode group or an electrode assembly. When the first electrodes is stacked an odd number of times, only one first electrode is present in the center in the stacking direction, but when the first electrodes is stacked an even number of times, two first electrodes are present in the center in the stacking direction. In addition, there are two first electrodes in the outermost layers in the stacking direction. The phrase: A1/A0 is at least 0.1, as mentioned above, means that the value of A1/A0 is at least 0.1 when the first electrode in the outermost layer and the first electrode in the center in the stacking direction, where the value of A1/A0 is the smallest, are selected. Similarly, the phrase: A1/A0 is 0.9 or less, as mentioned above, means that the value of A1/A0 is 0.9 or less when the first electrode in the outermost layer and the first electrode in the center in the stacking direction, where the value of A1/A0 is the largest, are selected. In the following, it is assumed that, when the phrase: A1/A0 is at least a is used, it means that the value of A1/A0 is at least a when the first electrode in the outermost layer and the first electrode in the center in the stacking direction, where the value of A1/A0 is the smallest, are selected. It is assumed that, when the phrase: A1/A0 is b or less, it means that the value of A1/A0 is b or less when the first electrode in the outermost layer and the first electrode in the center of the stacking direction, where the value of A1/A0 is the largest, are selected. In the following, it is assumed that, when referring to the lower limit of the adhesive strength in the center of the stacked body (for example, the electrode group or the electrode assembly), it means the adhesive strength of the first electrode having the lower adhesive strength of the one or two first electrodes located in the center. When referring to the upper limit of the adhesive strength in the center of the stacked body (for example, the electrode group or the electrode assembly), it means the adhesive strength of the first electrode having the higher adhesive strength of the one or two first electrodes located in the center.

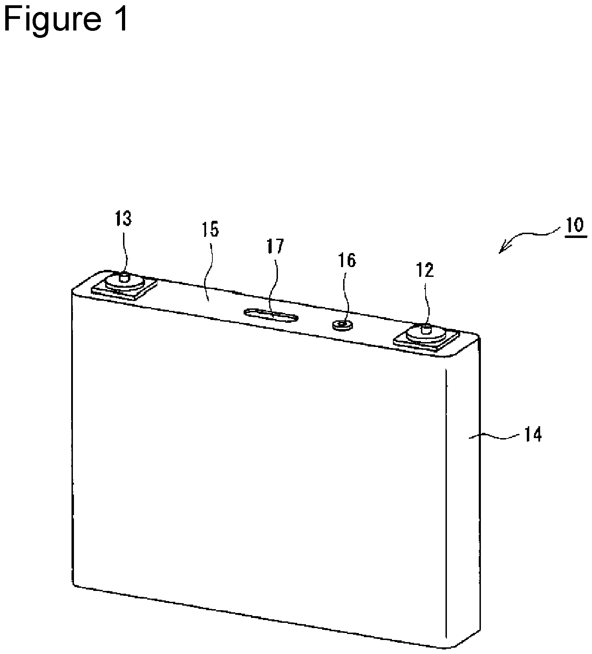

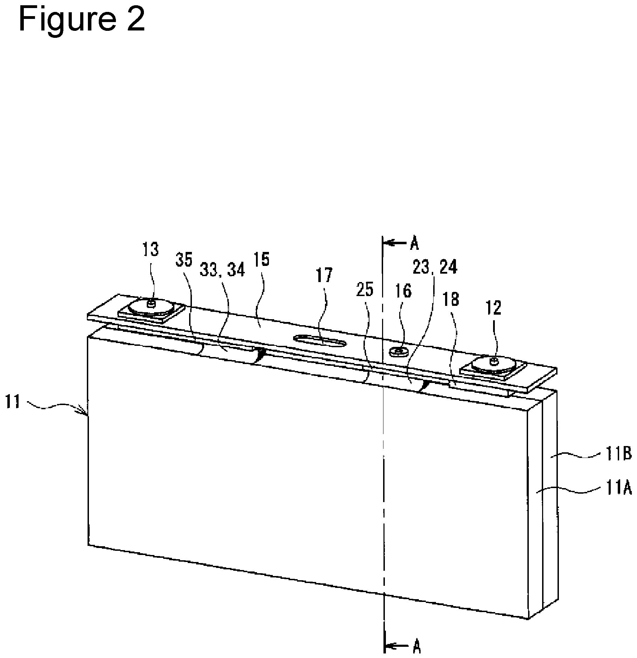

FIG. 1 is a perspective view of a rectangular secondary battery 10 according to an embodiment of the present disclosure, FIG. 2 is a perspective view of an electrode assembly 11 and a sealing plate 15 constituting the rectangular secondary battery 10 (with an outer can 14 removed). As illustrated in FIGS. 1 and 2, the rectangular secondary battery (hereinafter will simply be referred to as the "secondary battery") 10 includes, but not limited to, a rectangular container including the outer can 14 and the sealing plate 15 as the outer package.

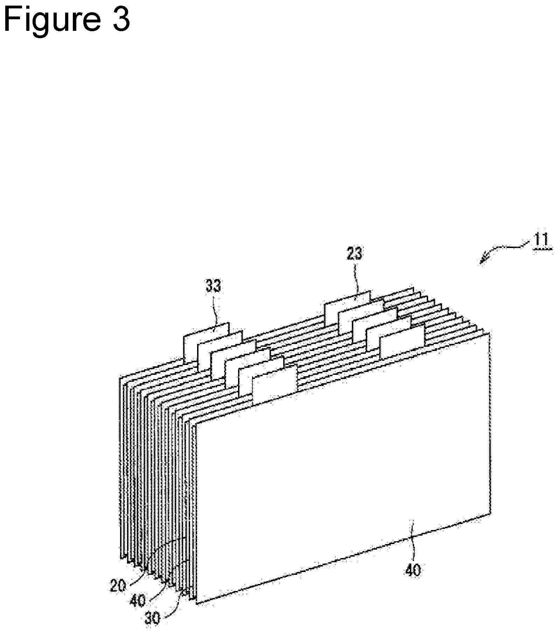

As illustrated in FIGS. 1 and 2, the secondary battery 10 includes an electrode assembly 11, an electrolyte, a bottomed tubular outer can 14 that stores the electrode assembly 11 and the electrolyte, and a sealing plate 15 to which a positive electrode terminal 12 and a negative electrode terminal 13 are attached and which closes an opening of the outer can 14. As will be described in detail later in connection with FIG. 3, the electrode assembly 11 has a structure in which the positive electrode 20 and the negative electrode 30 are alternately stacked via a separator 40. The outer can 14 is a rectangular metal container having a flat rectangular shape with its one end in the height direction being opened. The outer can 14 and the sealing plate 15 are made of a metal material that mainly contains, for example, aluminum.

The electrolyte may be an aqueous electrolyte, but preferably a nonaqueous electrolyte, and the nonaqueous electrolyte is used in the present embodiment. The nonaqueous electrolyte includes, for example, a nonaqueous solvent and an electrolyte salt dissolved in the nonaqueous solvent. As the nonaqueous solvent, for example, esters, ethers, nitriles, amides, a mixed solvent of two or more thereof, or the like may be used. The nonaqueous solvent may contain a halogen substitute obtained by substituting at least a part of hydrogen of the above solvents with halogen atoms such as fluorine. For example, as the electrolyte salt, a lithium salt such as LiPF₆ or the like is used.

As mentioned above, the positive electrode terminal 12 and the negative electrode terminal 13 are attached to the sealing plate 15. The sealing plate 15 has an elongated rectangular shape, with the positive electrode terminal 12 located on one end side in the longitudinal direction and the negative electrode terminal 13 located at the other end side in the longitudinal direction. The positive electrode terminal 12 and the negative electrode terminal 13 are external connection terminals that are electrically connected to another secondary battery 10 or a load, and are attached to the sealing plate 15 via an insulating member.

As will be described in more detail later, the positive electrode 20 includes a positive electrode tab 23 that is electrically connected to the positive electrode terminal 12, and the negative electrode 30 includes a negative electrode tab 33 that is electrically connected to the negative electrode terminal 13. The positive electrode terminal 12 is electrically connected to a positive electrode tab group 24 formed by a plurality of positive electrode tabs 23 stacked via a positive electrode current collector plate 25, and the negative electrode terminal 13 is electrically connected to a negative electrode tab group 34 formed by a plurality of negative electrode tabs 33 stacked via a negative electrode current collector plate 35.

The sealing plate 15 includes a current shut-off device 18 as a functional component to cut off the current path in the event of a battery abnormality. The functional component is, for example, a component that functions as a safety device or a control device for the secondary battery 10. The functional component is disposed on the inner surface of the sealing plate 15 in close proximity to the positive electrode terminal 12 or the negative electrode terminal 13. In the present embodiment, the current shut-off device 18 is attached to the positive electrode terminal 12 and is located inside the positive electrode terminal 12.

The current shut-off device 18 is a pressure-sensing safety device that interrupts the current path when an abnormality occurs in the secondary battery 10 to cause the internal pressure of the outer can 14 to soar above a predetermined pressure. The current shut-off device 18 is disposed, for example, between the positive electrode terminal 12 and the positive electrode current collector plate 25, and is electrically connected to the positive electrode terminal 12 and the positive electrode current collector plate 25 during normal use. The structure of the current shut-off device 18 is not limited, but one example is a device including a reversing plate that reverses away from the positive electrode current collector plate 25 when the internal pressure rises to cut the electrical connection with the positive electrode current collector plate 25, thus interrupting the current path between the positive electrode terminal 12 and the positive electrode current collector plate 25.

The sealing plate 15 also has an injection port 16 for injecting the nonaqueous electrolyte, and a gas discharge valve 17 that opens and discharges gas in the event of battery malfunctions. The gas discharge valve 17 is located in the center of the sealing plate 15 in the longitudinal direction, and the injection port 16 is located between the positive electrode terminal 12 and the gas discharge valve 17, respectively.

As illustrated in FIG. 2, the electrode assembly 11 is divided into a first electrode group 11A and a second electrode group 11B. The electrode groups 11A, 11B have, for example, the same stacking structure and dimensions, and are stacked and arranged in the thickness direction of the electrode assembly 11. At the upper end of each electrode group, a positive electrode tab group 24 formed by a plurality of positive electrode tabs 23 and a negative electrode tab group 34 formed by a plurality of negative electrode tabs 33 are provided, and each electrode group is connected to a corresponding collector plate of the sealing plate 15. Each of the electrode groups 11A, 11B is covered with a separator 40 around the outer periphery to enable independent battery reactions in the electrode groups 11A, 11B.

FIG. 3 is an exploded view of the electrode assembly 11. As illustrated in FIG. 3, the electrode assembly 11 includes a plurality of positive electrodes 20 and a plurality of negative electrodes 30. The electrode groups 11A, 11B constituting the electrode assembly 11 each includes, for example, one more negative electrode 30 than positive electrodes 20, so that the negative electrode 30 is located on both sides of the electrode groups 11A, 11B in the thickness direction. Although FIG. 3 illustrates a plurality of separators 40 placed one by one between the positive electrodes 20 and the negative electrodes 30, only one separator may be placed in the electrode group 11A , 11B. In that case, a long separator 40 is folded in a zigzag and placed between the positive electrodes 20 and the negative electrodes 30. As will be described in detail later, in the present embodiment, each of the electrode groups 11A, 11B includes an adhesive and is fabricated by a heat pressing process. Specifically, each of the electrode groups 11A, 11B is formed by the plurality of positive electrodes 20 and the plurality of negative electrodes 30 alternately stacked one on top of the other via the separator 40, and is pressed in the stacking direction using a pair of hot plates to apply heat and pressure to the stacked body to allow at least a portion of the adhesive to develop the adhesive strength.

Thus, the electrode assembly 11 includes the electrode group 11A and the electrode group 11B fabricated as described above as the stacked electrode assembly including the plurality of positive electrodes 20 and the plurality of negative electrodes 30 alternately stacked one on top of the other via the separator 40. The positive electrodes 20 each have an upwardly protruding positive electrode tab 23, and the negative electrodes 30 each have an upwardly protruding negative electrode tab 33. In other words, the positive electrodes 20 and the negative electrodes 30 are stacked and arranged so that those tabs face the same direction. The positive electrode tabs 23 are located at one end side of the electrode assembly 11 in the horizontal direction, and the negative electrode tabs 33 are located at the other end side of the electrode assembly 11 in the horizontal direction, while that the plurality of positive electrode tabs 23 is stacked and lined up in the thickness direction of the electrode assembly 11, and the plurality of negative electrode tabs 33 is stacked and lined up in the thickness direction of the electrode assembly 11.

The positive electrodes 20 includes a positive electrode core body and a positive electrode mixture layer disposed on the surface of the positive electrode core body. The positive electrode core body can be made of metal foil of, for example, aluminum or aluminum alloy that is stable in the potential range of the positive electrode 20, or a film with such a metal disposed on the surface layer. The positive electrode mixture layer includes a positive electrode active material, a conductive material, and a binder material, and is preferably provided on both sides of the positive electrode core body. The positive electrode 20 can be fabricated by, for example, applying a positive electrode mixture slurry including a positive electrode active material, a conductive material, a binder material, and the like to the positive electrode core body, allowing it to dry, and then compressing it to form the positive electrode mixture layer on both sides of the positive electrode core body.

The positive electrode 20 has a structure in which the positive electrode mixture layer made of a positive electrode mixture material is formed over the entire surface of the positive electrode core body except for the positive electrode tab 23 (hereinafter referred to as the "base portion portion"). A thickness of the positive electrode core body is, for example, from 5 µm to 20 µm, and preferably from 8 µm to 15 µm. The base portion of the positive electrode core body has a rectangular shape in front view, and the positive electrode tab 23 protrudes from one side of the rectangle. Typically, the positive electrode core body is made of a single sheet of metal foil by processing it to form the base portion and the positive electrode tab 23 in one piece.

A lithium transition metal composite oxide is used as the positive electrode active material. The metal elements included in the lithium transition metal composite oxide are Ni, Co, Mn, Al, B, Mg, Ti, V, Cr, Fe, Cu, Zn, Ga Sr, Zr, Nb, In, Sn, Ta, W, and the like. Among them, it is preferable to include at least one of Ni, Co, and Mn. Examples of a suitable composite oxide are a lithium transition metal composite oxide containing Ni, Co, and Mn, and a lithium transition metal composite oxide containing Ni, Co, and Al.

Examples of the conductive material used in the positive layer mixture layer include carbon materials such as carbon black, acetylene black, ketjen black, and graphite. Examples of the binder material used in the positive electrode mixture layer include fluorine resins such as polytetrafluoroethylene (PTFE) and polyvinylidene difluoride (PVdF), polyacrylonitrile (PAN), polyimide resins, acrylic resins, polyolefin resins, and the like. In addition, these resins can be used in combination with cellulose derivatives such as carboxymethyl cellulose (CMC) or its salt, polyethylene oxide (PEO), and the like.

The negative electrodes 30 has a negative electrode core body and a negative electrode mixture layer disposed on the surface of the negative electrode core body and made of a negative electrode mixture material. The negative electrode core body can be made of metal foil of, for example, copper that is stable in the potential range of the negative electrode 30, or a film with such a metal arranged on the surface layer. The negative electrode mixture layer includes the negative electrode active material and a binder material, and is preferably provided on both sides of the negative electrode core body. The negative electrode 30 can be fabricated by, for example, applying a negative electrode mixture slurry including a negative electrode active material, a binder material, and the like to the negative electrode core body, allowing it to dry, and then compressing it to form the negative electrode mixture layer on both sides of the negative electrode core body.

The negative electrode 30 has a structure in which the negative electrode mixture layer is formed over the entire surface of the base portion of the negative electrode core body except for the negative electrode tab 33. A thickness of the negative electrode core body is, for example, from 3 µm to 15 µm, and preferably from 5 µm to 10 µm. As in the case of the positive electrode 20, the base portion of the negative electrode core body has a rectangular shape in front view, and the negative electrode tab 33 protrudes from one side of the rectangle. Typically, the negative electrode core body is made of a single sheet of metal foil by processing it to form the base portion and the negative electrode tab 33 in one piece.

As the negative electrode active material, for example, a carbon-based active material that reversibly intercalates and de-intercalates lithium ions is used. Suitable carbon-based active materials include natural graphite such as flake graphite, vein graphite, or amorphous graphite, and artificial graphite such as massive artificial graphite (MAG) or graphitized mesophase carbon microbeads (MCMB). An Si-based active material consisting of at least one of Si and an Si-containing compound may also be used for the negative electrode active material, or a carbon-based active material and an Si-based active material may be used together.

For the binder material in the positive electrode mixture layer, fluorine resins, PAN, polyimides, acrylic resins, polyolefins, or the like can be used, as in the case of the positive electrode 20, but it is preferable to use styrene-butadiene rubber (SBR). Furthermore, the negative electrode mixture layer preferably includes CMC or its salt, polyacrylic acid (PAA) or its salt, polyvinyl alcohol (PVA), or the like. Among them, it is preferable to use SBR, CMC or its salt, and PAA or its salt together.

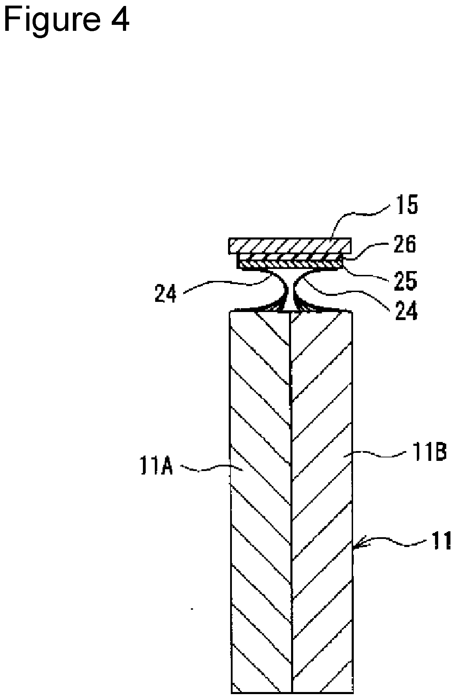

FIG. 4 schematically illustrates a cross-section taken along line A-A of FIG. 2. In the following, by referring to FIGS. 2 and 4, the structure of the positive electrode tab group 24 and the negative electrode tab group 34 of the electrode assembly 11 is described in detail. As illustrated in FIGS. 2 and 4, the electrode assembly 11 includes the positive electrode tab group 24 including the plurality of stacked positive electrode tabs 23, and the negative electrode tab group 34 including the plurality of stacked negative electrode tabs 33. The positive electrode tab group 24 is formed by overlapping the plurality of positive electrode tabs 23 in the stacking direction of the electrodes, and is provided for each electrode group 11A, 11B. Similarly, the negative electrode tab group 34 is formed by overlapping the plurality of negative electrode tabs 33 in the stacking direction of the electrodes, and provided for each electrode group 11A, 11B.

The positive electrode tab group 24 is bonded by welding or the like to the positive electrode current collector plate 25 attached to the inner surface (lower surface) of the sealing plate 15. The positive electrode current collector plate 25 is a plate-shaped conductive member that is electrically connected to the positive electrode terminal 12 via the current shut-off device 18 as described above. An insulating member 26 is interposed between the sealing plate 15 and the positive electrode current collector plate 25 to prevent contact between the two members. Similarly, the negative electrode tab group 34 is bonded by welding or the like to the negative electrode current collector plate 35 attached to the inner surface of the sealing plate 15 via an insulating member.

The positive electrode tab group 24 and the negative electrode tab group 34 may not have a particular shape and can be of any shape that allows them to function as conductive paths connecting the electrode assembly 11 and each terminal. In the examples illustrated in FIGS. 2 and 4, the plurality of positive electrode tabs 23 and the plurality of negative electrode tabs 33 of the electrode group 11A are respectively stacked in a curved state from the outside to the inside of the secondary battery 10 to form the positive electrode tab group 24 and the negative electrode tab group 34 both having a substantially U-shape in cross-sectional view. Similarly, the electrode group 11B also has such tab groups with a substantially U-shape in cross-sectional view. Each tab group may have a U-shape curving from the inside to the outside of the secondary battery 10. As illustrated in FIG. 4, the tab groups of the two stacked electrode tab groups may be arranged so that the cross-sectional shape of one tab group is substantially symmetrical to the cross-sectional shape of the other tab group with respect to the boundary between the electrode groups.

The positive electrode tab group 24 may be welded to the upper surface of the positive electrode current collector plate 25 facing the sealing plate 15, but is preferably welded to the lower surface of the positive electrode current collector plate 25. Although both the positive electrode tab group 24 and the negative electrode tab group 34 are welded to the lower surface of the current collector plate in the present embodiment, it may be possible that, for example, the positive electrode tab group 24 is welded to the lower surface of the positive electrode current collector plate 25, and the negative electrode tab group 34 is welded to the upper surface of the negative electrode current collector plate 35. Also, the present embodiment has described the electrode assembly 11 including divided electrode groups, that is, the first electrode group 11A and the second electrode group 11B, but the electrode assembly may include a single undivided electrode group.

After welding the electrode assembly 11 to the sealing plate 15, the sealing plate 15 is fitted, for example, to the opening of the outer can 14, and the fitted portion of the sealing plate 15 and the outer can 14 to which the electrode assembly 11 is attached by laser welding. Subsequently, a nonaqueous electrolyte is injected into the outer can 14 from the injection port 16, and then the injection port 16 is sealed with blind rivets to form the secondary battery 10.

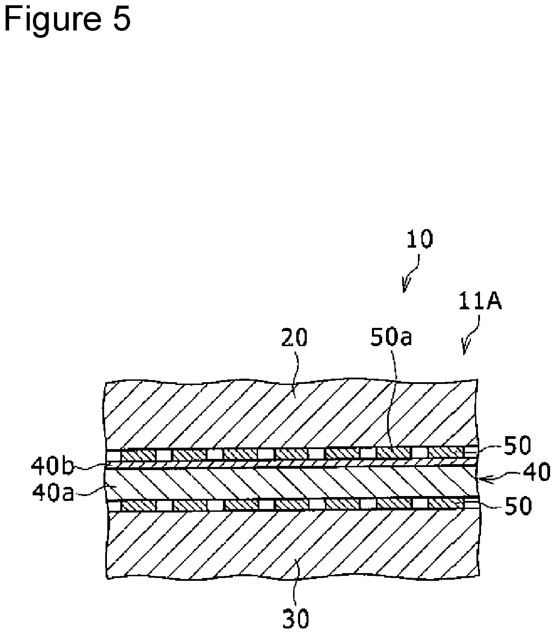

Next, the structure of the first electrode group 11A and the separator 40 is described in more detail. Since the second electrode group 11B has the same structure as that of the first electrode group 11A, the description therefor is omitted. FIG. 5 is an enlarged schematic cross-sectional view illustrating the structure of the first electrode group 11A (hereinafter simply referred to as the electrode group 11A) when an outer side thereof in the stacking direction is cut along a plane substantially orthogonal to the height direction, including a portion of the separator 40, a portion of the positive electrode 20, and a portion of a bonded portion 50a of an adhesive 50 (portion of the adhesive developing the adhesive strength) which will be described below. In other words, FIG. 5 is an enlarged schematic cross-sectional view in which the portion of the adhesive 50 that does not contribute to adhesion is not illustrated.

In the example illustrated in FIG. 5, the separator 40 includes a resin base material (for example, a polyolefin base material) 40a and a heat-resistant layer 40b that is provided on one side surface of the base material 40a in the thickness direction by coating or other existing methods. The heat-resistant layer 40b may be provided on both sides, that is, one side surface and the other side surface, in the thickness direction of the base material 40a, or alternatively, the separator 40 may include no heat-resistant layer.

The electrode group 11A further includes the adhesive 50. For example, in the example illustrated in FIG. 5, the adhesive 50 is applied in a manner that, subsequent to forming the heat-resistant layer 40b on the entire surface of one side surface in the thickness direction of the base material 40a, a plurality of dot-shaped adhesives (dot-shaped portions) is disposed by printing or the like on the entire surface of one side surface of the separator 40 without the heat-resistant layer 40b formed thereon and on the entire surface of the other side surface of the separator 40 with the heat-resistant layer 40b formed thereon with an approximately constant area density. The amount of adhesive 50 included in each dot-shaped adhesive of the plurality of dot-shaped adhesives 50 is approximately the same. A number density of the dot-shaped adhesives 50 is approximately the same over the entire areas of the one side surface and the other side surface of the separator 40. Instead of the dotted form, the adhesive 50 may be applied to all over the surface of the separator. That is, the adhesive may be applied to at least one of the one side surface and the other side surface of the separator with an approximately constant area density, thus forming the adhesive layer on at least one side surface of the separator.

The separator 40 and the adhesive 50 are described in more detail. The adhesive 50 is preferably located between the base material 40a and the electrode (at least one of the positive electrode 20 and the negative electrode 30). For example, the heat-resistant layer (slurry coating layer) 40b containing alumina particles as the main component is provided on the base material 40a, and the adhesive 50 may be applied over the heat-resistant layer 40b. The heat-resistant layer 40b can minimize the possibility of breakage of the separator 40 caused by inclusion of the foreign matters, nail punctures, or the like, and can also decrease shrinkage of the separator 40 in a case of a temperature rise.

The base material 40a made of a porous resin can function by itself as the separator 40. A porous film having ion permeability and insulating characteristic is used as the base material 40a. A thickness of the base material 40a is, for example, from 1 µm to 20 µm. An example of the material of the base material 40a is an olefin resin such as polyethylene, polypropylene, a copolymer of ethylene-propylene, or a copolymer of ethylene, propylene, and other α- olefins. The melting point of the resin base material is generally 200°C or lower.

The porous film that constitutes the base material 40a has many pores to allow lithium ions to pass through, but its surface irregularities are smaller than those of the heat-resistant layer 40b, and the surface is flatter than that of the heat-resistant layer 40b. The size (maximum length) of the pores or recesses on the surface of the base material 40a is, for example, less than 0.5 µm, and preferably less than 0.3 µm.

The porous heat-resistant layer 40b may be made of a resin with a higher melting point or softening point than the resin that constitutes the base material 40a, such as aramid resins, polyimide, polyamide-imide, or the like. but is preferably composed mainly of an inorganic compound. The heat-resistant layer 40b is preferably made of insulating inorganic compound particles and a binder material that binds the particles to each other and binds the particles with the base material 40a. The heat-resistant layer 40b has the ion permeability and insulating characteristic like the base material 40a. A thickness of the heat-resistant layer 40b is, for example, from 1 µm to 10 µm, and preferably from 1 µm to 6 µm.

For example, at least one type of inorganic compound particles selected from alumina, boehmite, silica, titania, and zirconia can be used as the main component of the heat-resistant layer 40b. Among them, it is preferable to use alumina or boehmite. The content of the inorganic compound particles in the heat-resistant layer 40b is preferably from 85 mass% to 99.9 mass%, and preferably from 90 mass% to 99.5 mass%.

There are no restrictions on the shape of the inorganic compound particles, and, for example, spherical or prismatic particles can be used. The average diameter of the spherical particles or the average length of one side of the prismatic particles is preferably from 0.1 µm to 1.5 µm, and preferably from 0.5 µm to 1.2 µm. When the particle diameter of the inorganic compound particles is within such ranges, the heat-resistant layer 40b with good ion permeability and excellent durability can be formed.

As the binder material for the heat-resistant layer 40b, the binder material similar to that included in the positive electrode mixture layer and the negative electrode mixture layer, for example, fluorine resins such as PVdF, SBR, or the like can be used. The content of the binder material is preferably from 0.1 mass% to 15 mass%, and more preferably from 0.5 mass% to 10 mass% of the heat-resistant layer 40b. The heat-resistant layer 40b is formed by, for example, applying a slurry including inorganic compound particles and the binder material to one side surface of the porous film that constitutes the base material 40a and drying the coated film. By forming the heat-resistant layer 40b on the base material 40a as described above, grooves or recesses are formed between adjacent inorganic compound particles on the surface of the heat-resistant layer 40b.

As the adhesive 50, for example, an acrylic resin-based adhesive, a urethane resin-based adhesive, an ethylene-vinyl acetate resin-based adhesive, or an epoxy resin-based adhesive can be used. Examples of the resin constituting the adhesive 50 include an acrylic polymer, a diene polymer, polyurethane, and a fluorine resin such as PVdF. As described above, the adhesive 50 may have a particle polymer shape or a layered polymer shape. The adhesive 50 may be applied to one side surface or both side surfaces of the separator 40, but it is preferable that the adhesive 50 is applied on both sides, as it enhances convenience of handling the electrode group 11A (electrode assembly 11) and suppresses misalignment of the stacked body.

For example, with reference to FIG. 5, the base material 40a may be made of a porous polyethylene film, the heat-resistant layer 40b is formed on one side of the base material 40a, and the dot-shaped adhesive particles made of acrylic polymer may be disposed on both the base material 40a, which constitutes one side of the separator 40, and the heat-resistant layer 40b, which constitutes the other side surface of the separator 40. Then, the heat-resistant layer 40b and the positive electrode mixture layer may be bonded with the adhesive particles, and the base material 40a and the negative electrode mixture layer may be bonded with the adhesive particles. Bonding the mixture layers with the separator 40 is carried out, for example, by the heat pressing process in which press plates heated to a predetermined temperature are brought into contact with one side surface and the other side surface of the stacked body in the stacking direction to apply pressure.

Alternatively, the stacked electrode group 11A may include an adhesive layer made of the adhesive particles and formed between the separator 40 and each electrode 20, 30. A thickness of the adhesive layer is, for example, from 0.1 µm to 1 µm, or from 0.2 µm to 0.9 µm, and is determined according to the amount of the adhesive and, when the adhesive is in the particle form, the particle diameter and the like. The adhesive layer is formed, for example, by applying a slurry including the adhesive particles to the surface of the separator and allowing it to dry. Since the slurry of the adhesive particles, a so-called emulsion in which minute adhesive particles are dispersed in water can be used. In that case, a separator with an adhesive layer made of adhesive particles can be formed on both sides.

Here, the average diameter of the adhesive particles is, for example, from 0.1 µm to 1 µm, and preferably from 0.5 µm to 0.7 µm. The average particle diameter of the adhesive particles is measured by observing the surface of the separator using an SEM in the same way as measuring the average particle diameter of the inorganic compound particles that make up the heat-resistant layer. The average diameter of the adhesive particles is, for example, not more than the average diameter of the inorganic compound particles constituting the heat-resistant layer. Accordingly, the adhesive particles may completely permeate into the recesses that exist on the surface of the heat-resistant layer. On the other hand, the average diameter of the adhesive particles is larger than, for example, the grooves or recesses that exist on the surface of the resin base material. Thus, the adhesion surface becomes larger than the surface of the heat-resistant layer, easily securing the minimum necessary adhesive strength.

There are various methods for bonding the positive electrode 20 with the separator 40 and the negative electrode 30 with the separator 40, and the bonding method using a heat press machine can be used. Any method other than the heat press method may be used to bond the separator with the electrodes. In the bonding method using the heat press machine, for example, it is preferable to place the stacked body on a metal plate heated to a predetermined temperature, and then move a metal plate heated to the predetermined temperature from above to press the stacked body with constant pressure. A temperature of the upper and lower metal plates may be the same or different. Preferably, the temperature of the metal plates should be higher than the softening temperature of the adhesive, and the higher the temperature, the shorter the time required for heat transfer to the center of the stacked body. However, if the temperature is too high, the heat shrinkage of the separator becomes noticeable, so that the temperature is preferably from 50°C to 120°C, and more preferably from 70°C to 110°C.

As to the press pressure of the stacked body, if the press pressure is too low, it is difficult to fix the adhesive, and if the press pressure is too high, the separator 40 itself may deform easily in the thickness direction, making it difficult to ensure ion permeability. The press pressure is preferably from 0.5 MPa to 8 MPa, and more preferably from 1 MPa to 4 MPa.

As to the time for pressing the stacked body, the shorter the time, the more desirable it is to speed up the production takt time. However, if the time is too short, the adhesive strength tends to be insufficient in the center of the electrode group (electrode assembly). In addition, as the thickness of the electrode (electrode plate) increases and the number of stacked layers increases, it becomes more difficult to transfer heat to the inside of the electrode group (inside the electrode assembly), and it takes a great deal of time to bring the inside of the electrode group (inside the electrode assembly) to a predetermined temperature.

For example, as the negative electrode, the electrode plate used may be formed by disposing the active material mainly made of graphite on both sides of the Cu core material with equal thickness on both sides to attain a total thickness of 165 µm. As the positive electrode, the electrode plate used may be formed by disposing the active material mainly made of a lithium nickel-cobalt-manganese complex oxide on both sides of the Al core material with equal thickness on both sides to attain a total thickness of 137 µm. The electrode assembly used may include, but not limited to, 36 negative electrodes and 35 positive electrodes.

Subsequent to the heat pressing process, for example, the electrode assembly 11 is inserted into the metal outer can 14, covered with the sealing body, and then the electrolyte is injected from the sealing port. The electrolyte begins to permeate from the end portions between the electrodes 20, 30, and reaches the center of each electrode group 11A, 11B. A permeation amount of liquid is larger on the one side surface (upper surface) and on the other side surface (lower surface) in the stacking direction of the electrode group 11A, 11B due to a smaller number of electrode ends to which the liquid flows, while the permeation amount of liquid is smaller in the center in the stacking direction of the electrode group 11A, 11B. In other words, the liquid flowability of the electrolyte becomes worse in the center of each electrode group 11A, 11B in the stacking direction, and it takes time for the electrolyte to permeate the entire electrode group 11A, 11B. For this reason, it is preferable for the liquid flowability to make the adhesive strength in the center of each electrode group 11A, 11B in the stacking direction as weak as possible to increase the gap into which the electrolyte can permeate.

Therefore, in the secondary battery 10 of the present disclosure, for each of the electrode groups 11A, 11B, the adhesive strength in the center in the stacking direction of the electrode group 11A, 11B is at least 0.1 times, and more preferably at least 0.3 times the adhesive strength on one side surface in the stacking direction and on the other side surface in the stacking direction. In addition, for each of the electrode groups 11A, 11B, the adhesive strength in the center in the stacking direction of the electrode groups 11A, 11B is not more than 0.9 times, and more preferably not more than 0.5 times the adhesive strength on one side surface in the stacking direction and on the other side surface in the stacking direction. It is noted that, for each of the electrode groups 11A, 11B, if the adhesive strength in the center in the stacking direction of the electrode group 11A, 11B is less than 0.1 times the adhesive strength on at least one side surface in the stacking direction and on the other side surface in the stacking direction of the electrode group 11A, 11B, the center portion in the stacking direction of the electrode assembly may be peeled off during transportation of the electrode assembly after bonding. On the other hand, for each of the electrode groups 11A, 11B, if the adhesive strength in the center in the stacking direction of the electrode group 11A, 11B is greater than 0.9 times the adhesive strength on at least one side surface in the stacking direction and on the other side surface in the stacking direction of the electrode groups 11A, 11B, the adhesive in the center in the stacking direction needs to be melt sufficiently. This requires a large amount of time for the heat press and leads to a poor productivity.

Furthermore, when the heat press is performed under high temperature and high pressure conditions, the separator on the outer side in the stacking direction tends to collapse, so that the temperature and pressure needs to be lower than the predetermined values. As a result, a large amount of time is required for the heat press to achieve the 0.9 times described above. In addition, after the injection of the electrolyte subsequent to the heat pressing process and the electrolyte has flown sufficiently, the adhesive strength tends to be lower than that before the flowing of the electrolyte, but the adhesive strength ratio is generally maintained. The amount of liquid that has permeated into the electrode active material can be determined, for example, according to the change in mass of the electrode before and after electrolyte injection.

In the following, the present disclosure will be described more in detail by way of experimental examples using nonaqueous electrolyte secondary batteries, but the present disclosure is not limited to these experimental examples.

### [Positive Electrode]

As the positive electrode active material, 93 parts by mass of lithium-containing transition metal oxide expressed as LiNi_{1/3}Co_{1/3}Mn_{1/3}O₂, 5 parts by mass of acetylene black (AB), and 2 parts by mass of polyvinylidene difluoride (PVdF) were mixed, to which an appropriate amount of N-methyl-2-pyrrolidone (NMP) was added to prepare a positive electrode mixture slurry. Subsequently, the positive electrode mixture slurry was applied to both sides of the positive electrode current collector made of aluminum foil having a thickness of 15 µm, except for the lead portion, and allowed the coated film to dry. The coated film was then compressed using a roller and cut to a predetermined electrode size. An area excluding the tab on one side of the positive electrode in the thickness direction was 138 x 75 mm².

### [Negative Electrode]

96 parts by mass of graphite powder, 2 parts by mass of carboxymethyl cellulose (CMC), and 2 parts by mass of styrene-butadiene rubber (SBR) were mixed, and an appropriate amount of water was added to prepare a negative electrode mixture slurry. Subsequently, the slurry was applied to both sides of a long negative electrode current collector made of copper foil having a thickness of 8 µm, except for the lead portion, and allowed the coated film to dry. The coated film was then compressed using a roller and cut to a predetermined electrode size. An area except for the tab on one side surface of the negative electrode in the thickness direction was 140 x 78 mm².

### [Separator]

A separator including a porous resin base material and a porous heat-resistant layer formed on only one side surface of the resin base material was prepared. As the resin base material, a porous polyethylene film having a thickness of 15 µm was used. As the heat-resistant layer, a layer composed mainly of prismatic boehmite particles having an average length of 0.5 µm per side was used. On the surface of this layer, a number of grooves and recesses into which the adhesive particles having a particle size of approximately 0.5 µm were able to permeate without causing a significant deformation of the adhesive particles were observed.

### [Electrolyte]

Ethylene carbonate (EC), ethyl methyl carbonate (EMC), and dimethyl carbonate (DMC) were mixed in a volume ratio of 3:3:4. To this mixed solvent, LiPF₆ was dissolved at a concentration of 1.2 mol/L to prepare the electrolyte.

### [Electrode Assembly]

A plurality of dot-shaped adhesives with a constant area density was applied by printing to both one side surface and the other side surface in the thickness direction of the separator fabricated as described above. Specifically, a dispersion (emulsion) of the adhesive particles composed mainly of acrylic polymer was applied to both sides of the fabricated separator (long body), and allowed it to dry to fabricate the separator with adhesive. Subsequently, the separator was placed on the bottom layer, followed by repeatedly stacking the negative electrode plate with the electrode tab on which no active material was applied, a folded separator, the positive electrode plate with the electrode tab, a folded separator, ..., thus stacking the negative electrodes and the positive electrodes while folding the separator in a zigzag. After the 36th negative electrode plate was placed, the separator was placed on top of it, and at the same time, the entire stacked body was wrapped around with the separator by one and a half times, and the edge of the separator was taped. Subsequently, the stacked body was placed on a preheated press plate and pressure was applied to the stacked body by a similarly heated upper press plate. Five seconds after the stacked body was placed on the lower press plate, the upper press plate was lowered to apply pressure to the stacked body. Once the application of the pressure was completed, the stacked body was transferred from the press machine.

### [Fabrication of Secondary Battery]

70 protruding and overlapping tabs of all the positive electrodes in the electrode assembly were welded to a positive electrode current collector plate of the sealing body, and 72 protruding and overlapping tabs of all the negative electrodes in the electrode assembly were welded to a negative electrode current collector plate of the sealing body. As the outer can, a rectangular outer can mainly made of Al and having a height of 95 mm, a horizontal length of 148 mm, a depth of 29 mm, and a thickness of 1.5 mm was used. A nonaqueous electrolyte was injected into the outer can through the injection port 16, and the injection port was sealed with blind rivets to form a secondary battery.

### [Outline of Evaluation]

A plurality of electrode assemblies was fabricated by changing the temperature and press duration of the hot plate used in performing the pressing process. An adhesive strength ratio of each electrode assembly was calculated, and the permeation of the electrolyte into the electrode plates and the productivity were evaluated with respect to the adhesive strength ratio. The calculation of the adhesive strength ratio and the evaluation of the above two items were performed as described below.

### [Calculation of Adhesive Strength Ratio]

To evaluate the adhesive strength ratio, the adhesive strength between the outermost positive electrode and the separator and the adhesive strength between the outermost negative electrode and the separator were measured respectively, and the adhesive strength between the electrode plate and the separator having a higher value was measured and regarded as A0. Subsequently, the adhesive strength of the ninth electrode, when counting only the same electrode from the upper and lower negative electrode plates or upper and lower positive electrode plates was measured, while the adhesive strength of the 18th electrode (the central layer of the electrode assembly), when counting only the same electrode from the upper and lower positive electrode plates, was measured, and those adhesive strengths were denoted as A9, A18, respectively. Then, the ratios A9/A0 and A18/A0 were determined (hereinafter referred to as Ai/A0). In all the examples and comparative examples of the present embodiment, the adhesive strength between the porous film and the negative electrode mixture layer was higher, so that the adhesive strength between the porous film and the negative electrode mixture layer was used as the value of Ai/A0. The adhesive strength of the upper and lower electrode plates were substantially the same, so that the adhesive strength of the lower electrode plate was used as A0. The adhesive strength was evaluated before and after the electrolyte was injected into the electrode assembly.

The adhesive strength between the separator and each electrode was measured as follows. Specifically, for each test sample (each test cell), a digital force gauge (FGP-0.5 manufactured by Nidec-Shimpo Corporation) attached to a small desktop testing machine (FGS-TV, manufactured by Nidec-Shimpo Corporation) was used to measure the adhesive strength of a bonded surface (interface X) between the base material of the separator and the negative electrode, and the adhesive strength of a bonded surface (interface Y) between the heat-resistant layer of the separator and the positive electrode. The test cell before electrolyte injection was disassembled leaving the bonded surface subject to the measurement of the adhesive strength, and the disassembled test piece was cut into 20 mmwide strips. The strip-shaped test piece was then attached to a flat plate on the side opposite to the bonding surface to be measured using double-sided tape. The flat plate was placed on a fixture that moves in a constrained manner in the direction of the plate surface without resistance and not in the vertical direction. Subsequently, the end portion of the separator of the test piece was picked up with a clip attached to the tip of the digital force gauge and pulled up in the direction of 90 degrees from the electrode surface to measure the strength applied to the digital force gauge. If the measured value of the digital force gauge is 0.2 N, the adhesive strength of the bonding surface to be measured is 0.2 x 1000/20 = 10 N/m. The adhesive strength was measured using the electrode assembly before and after the electrolyte was injected into the electrode assembly.

### [Evaluation of Liquid Flowability (Permeability) of Electrolyte to Electrodes]

After the electrolyte was injected from the sealing port, the batteries were held at room temperature for 8 hours and 24 hours, respectively, to examine the amount of the electrolyte contained in the electrode active material. The stacked body was removed from the battery after holding the battery for a certain period of time, and the electrode group was disassembled. The negative electrode on the top layer, the nineth negative electrode on the nineth layer from the top layer, and the 18th negative electrode on the 18th layer from the top layer were cut out and cut into 5 cm squares at around the center of each negative electrode, and the mass of each cut electrode was measured to calculate the content of the electrolyte. The cut electrodes were each placed in a metal-coated bag whose mass was measured separately for mass measurement to prevent drying of the electrolyte between cutting and measurement. On the other hand, the single negative electrode plate was cut out to 5 cm squares in advance and immersed in a tray filled with the electrolyte for at least 3 hours to allow the electrolyte to sufficiently soak into the active material. The amount of electrolyte soaked into the electrode was calculated according to a change in the mass of the negative single electrode plate before and after soaking in the electrolyte, and the calculated amount was 130 mg. Using this liquid content as the amount of liquid contained in the battery when sufficiently soaked into the active material, the amount of electrolyte contained in the battery after disassembly was evaluated. Those containing not more than 70 mg of liquid were sorted as having a poor injectability, those containing more than 70 mg and not more than 100 mg were sorted as having a marginal injectability, and those containing more than 100 mg were sorted as having an excellent liquid injectability.

[Evaluation of Productivity] When the holding time of the heat pressing process, that is, the time required from placing the stacked body on the press plate to the process of transferring the stacked body after the heat press was completed, was less than 60 seconds, the heat press takt was sorted as excellent; when the time was from 60 seconds and not more than 90 seconds, it was sorted as marginal; and when the time was 90 seconds or longer, it was sorted as poor.

### [Test Results]

The test results are shown in the Table 1A,1B below.

**[Table 1A]**

| | Heat Press | | | Adhesive Strength Before Soaked in Electrolyte (Measured Position) | | | Adhesive Strength Ratio |
|---|---|---|---|---|---|---|---|
| | Temperature (Celsius) | Pressure (Mpa) | Holding Time (second) | A0 | A9 | A18 | A18/A0 |
| Example1 | 110 | 2 | 50 | 10.5 | 5.5 | 3 | 0.29 |
| Example2 | 100 | 2 | 55 | 8 | 4.9 | 2.8 | 0.35 |
| Examples | 90 | 2 | 60 | 6.2 | 3.6 | 1.8 | 0.29 |
| Example4 | 100 | 2 | 50 | 8 | 3.7 | 1.2 | 0.15 |
| Examples | 90 | 2 | 70 | 6.3 | 4 | 2.4 | 0.38 |
| Comparative Example1 | 100 | 2 | 90 | 8.5 | 8.2 | 7.7 | 0.91 |
| Comparative Example2 | 70 | 2 | 500 | 2.6 | 2.8 | 2.8 | 1.08 |

**[Table 1B]**

| | Adhesive Strength After Soaked in Electrolyte (Measured Position) | | | Adhesive Strength Ratio | Heat Press Takt | Liquid Permeability | |
|---|---|---|---|---|---|---|---|
| | A0 | A9 | A18 | A18/A0 | | 8h | 24h |
| Example1 | 2.2 | 1.1 | 0.4 | 0.18 | Excellent | Excellent | Excellent |
| Example2 | 1.8 | 1.0 | 0.3 | 0.17 | Excellent | Excellent | Excellent |
| Examples | 1 | 0.7 | 0.3 | 0.30 | Marginal | Excellent | Excellent |
| Example4 | 1.2 | 0.6 | 0.3 | 0.25 | Excellent | Marginal | Excellent |
| Examples | 1 | 0.6 | 0.3 | 0.30 | Marginal | Excellent | Excellent |
| Comparative Example1 | 0.9 | 0.9 | 0.9 | 1.00 | Marginal | Poor | Poor |
| Comparative Example2 | 0.4 | 0.4 | 0.4 | 1.00 | Poor | Excellent | Excellent |

As shown in Table 1A,1B, according to one test example above, when the adhesive strength ratio was from 0.1 to 0.9 before and after the electrode was soaked in the electrolyte, the electrode assembly with excellent productivity and liquid flowability (liquid permeability) was fabricated. Furthermore, according to the one test example above, when the adhesive strength ratio was not more than 0.4 before and after the electrode was soaked in the electrolyte, the electrode assembly with excellent productivity and liquid flowability was fabricated. According to several tests conducted by the inventors of the present application by changing the temperature condition of the hot plate, the pressure condition applied by the hot plate, and the pressing time by the hot plate in the pressing process, it was found that, with the adhesive strength ratio of from 0.1 to 0.9, the electrode assembly with good productivity and liquid flowability was fabricated, and with the adhesive strength ratio of from 0.3 to 0.5, the electrode assembly with excellent productivity and liquid flowability was fabricated.

### [Preferable Structures, And Effects Derived From Such Structures]

As described above, the secondary battery 10 of the present disclosure includes the adhesive 50 disposed between at least one side surface in the thickness direction of the separator 40 and the negative electrode (first electrode) 30. Also, in the secondary battery 10 of the present disclosure, A1/A0 is at least 0.1 and less than 0.9, where the adhesive strength between the outermost negative electrode 30 and the separator 40 is A0 [N/m] and the adhesive strength between the negative electrode 30 located in the center in the stacking direction of the stacked layer group (stacked body) 11A and the separator 40 is A1 [N/m].

Thus, the electrolyte can permeate into the inner part in the stacking direction in a short time. This allows manufacturing of the secondary battery 10 in a short time in which the amount of electrolyte retained can easily be kept at a uniform value regardless of the position in the stacking direction. The power generation performance of the secondary battery 10 can be increased and, furthermore, the occurrence of difference in reaction speed depending on the positions in the stacking direction can be suppressed, thus achieving improved durability and good productivity of the secondary battery 10.

The longer side of the negative electrode 30 may be at least 10 cm, and the area of one side surface in the thickness direction of the negative electrode 30 may be at least 90 cm².

As described above, the liquid flowability (liquid permeability) of the electrolyte to the center portion in the stacking direction decreases as the secondary battery 10 has a larger capacity.

The secondary battery 10 having the present structure is a large-capacity battery in which the longer side of the negative electrode 30 is at least 10 cm and the area of one side surface of the negative electrode 30 in the thickness direction is at least 90 cm². The excellent liquid flowability of the electrolyte, which is one of the main effects of the technology of the present disclosure, can significantly improve the power generation performance and the durability of the secondary battery 10 in comparison with the secondary battery of the conventional structure using the adhesives.

A second adhesive may be provided between the other side surface in the thickness direction of the separator 40 and the positive electrode 20. It is also possible that, when the adhesive strength between the outermost positive electrode 20 and the separator 40 is A2 [N/m], and the adhesive strength between the positive electrode 20 located in the center in the stacking direction of the stacked body and the separator 40 is A3 [N/m], A3/A2 may be at least 0.1 and less than 0.9.

With the present structure, the electrolyte can also permeate into the center portion of the electrode group 11A in the stacking direction between the positive electrode 20 and the separator 40. This further improves the power generation performance, durability, and mass productivity of the secondary battery 10.

It is possible that one side surface of the separator 40 on which the adhesive is applied may be included in the porous base material (for example, polyolefin base material) having ionic permeability and insulating characteristic.

The present structure can increase the adhesive strength acting between the separator 40 and the electrode (at least one of the positive and negative electrodes), and largely suppress the misalignment of the separator 40 relative to the electrode.

The adhesive may also be applied to the other side surface of the separator 40 in the thickness direction, and the other side surface of the separator 40 may be included in the porous substrate (for example, polyolefin base material) having ion permeability and insulating characteristic.

The present structure can increase the adhesive strength between the separator 40 and the positive electrode 20, and can also increase the adhesive strength between the separator 40 and the negative electrode 30.

The adhesive is applied to at least one side surface in the thickness direction of the separator 40 with an approximately constant area density, and the area density of the bonded portion of the adhesive may change in the stacking direction.

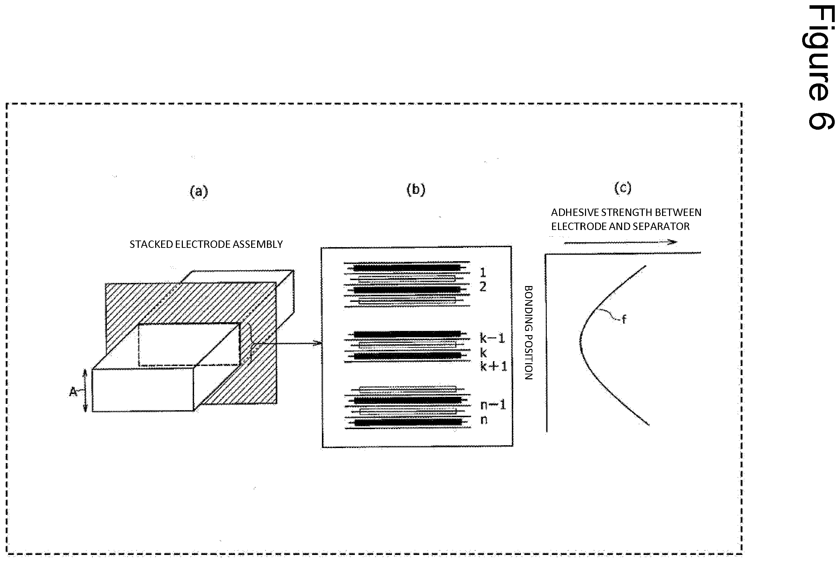

FIG. 6 is a schematic diagram illustrating the relationship between the position in the stacking direction (indicated by arrow A) and the adhesive strength between the electrode and the separator in the stacked electrode assembly. In the technology of the present disclosure, in a two-dimensional graph with the vertical axis representing the position in the stacking direction and the horizontal axis representing the horizontal axis as shown in FIG. 6(c), the distribution of the adhesive strength between the electrode and the separator is expressed by the function f that is nearly line symmetric with large values at both ends in the stacking direction and a minimum value in the center in the stacking direction.

Here, such a function shows the behavior similar to that of the function of the distribution of the amount of heat (temperature distribution) imparted to the stacked body from the hot plate in the pressing process, in the two-dimensional graph with the vertical axis representing the position in the stacking direction and the vertical axis representing the amount of heat imparted to the stacked body from the hot plate in the pressing process. In other words, the distribution of the amount of heat (temperature distribution) imparted to the stacked body from the hot plate in the pressing process is also nearly line symmetric, as shown in FIG 6(c), with large values at both ends in the stacking direction and a minimum value in the center in the stacking direction.

The present modification can skillfully utilize such a behavior of the heat distribution (temperature distribution) to easily decrease the adhesive strength at the inner side (center side) in the stacking direction relative to the adhesive strength at the outer side in the stacking direction. In other words, although the adhesive is applied to at least one side surface of the separator in the thickness direction with an approximately constant area density, the present modification can also use the distribution of the heat amount (temperature distribution) in the heat pressing process that shows the trend similar to the trend of the function shown in FIG. 6(c). Thus, the amount of the adhesive that melts on the inner side in the stacking direction is reduced to be smaller than the amount of the adhesive that melts in the outer side in the stacking direction, and the amount of the bonded portion of the adhesive that develops the adhesive strength in the inner side in the stacking direction is reduced to be smaller than the amount of the bonded portion of the adhesive that develops the adhesive strength in the outer side in the stacking direction.

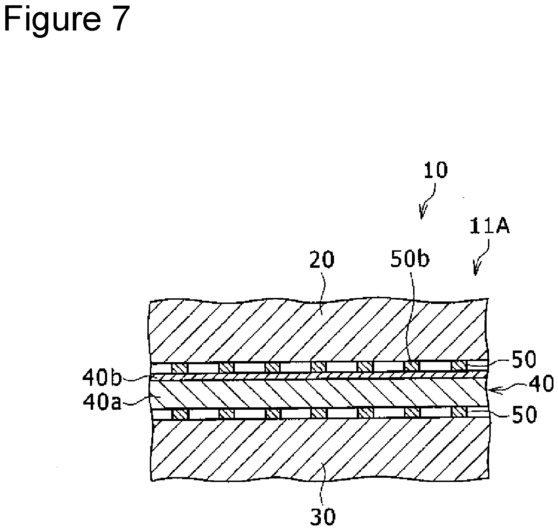

Specifically, FIG. 7 is an enlarged schematic cross-sectional view of a portion of the inner side of the stacking direction of the first electrode group 11A when cut along a plane orthogonal to the height direction, not illustrating the portions of the adhesive 50 that do not develop the adhesive strength in this enlarged schematic cross-sectional view, as in FIG. 5. Here, the area density of the adhesive 50 to be applied is the same in the outer side and the inner side in the stacking direction, but as illustrated in FIGS. 5 and 7, it is possible to use the distribution of the amount of heat (temperature distribution), which shows the trend similar to the trend of the function f shown in FIG. 6(c), to reduce the amount of bonded portions 50a, 50b in which the adhesive 50 develops the adhesive strength to be smaller at the inner side in the stacking direction than at the outer side in the stacking direction. Therefore, the adhesive strength at the inner side (center side) in the stacking direction can be easily reduced relative to the adhesive strength at the outer side in the stacking direction.

It has been avoided in the past to perform the pressing process under the physical condition of not melting a part of the adhesive applied to the separator, because such a condition may prevent development of the adhesive effect of the part of the adhesive applied and cause an increase of the material cost.

By applying the adhesive 50 to the separator 40 with an approximately constant area density, it is possible to achieve a remarkable effect of significantly increasing the mass productivity, which far surpasses the above problem, when compared to the case of manufacturing the electrode assembly using a plurality of different separators with different amounts of adhesive being applied. Thus, the present modification can easily fabricate the electrode assembly in which the adhesive strength is smaller at the inner side (center side) in the stacking direction than at the outer side in the stacking direction, and furthermore, can significantly increase the mass productivity

Since the technology of the disclosure of the present application aims to reduce the adhesive strength at the inner side (center side) in the stacking direction of the stacked body compared to the adhesive strength at the outer side in the stacking direction, it may be possible to fabricate the electrode assembly using a plurality of different separators with different amounts of adhesive being applied.

The separator may be folded in a zigzag.

The present structure can improve the handling of the stacked body (electrode group, electrode assembly).

In manufacturing the secondary battery 10 having the stacked electrode assembly 11 of the present disclosure, at least a part of the adhesive 50 may be welded in the heat pressing process to manufacture the stacked electrode assembly 11. With the present structure, the secondary battery 10 having the stacked electrode assembly 11 of the present disclosure can be easily fabricated.

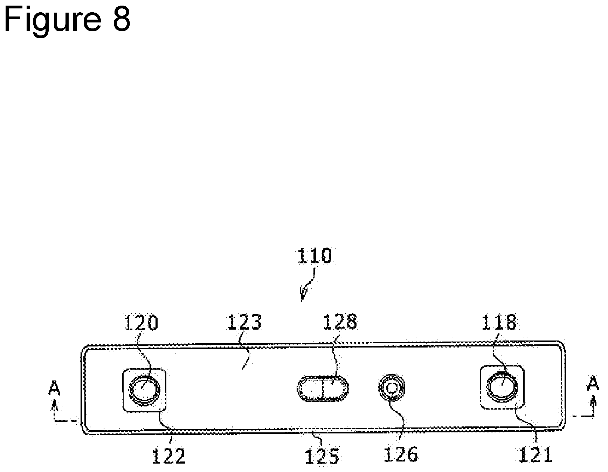

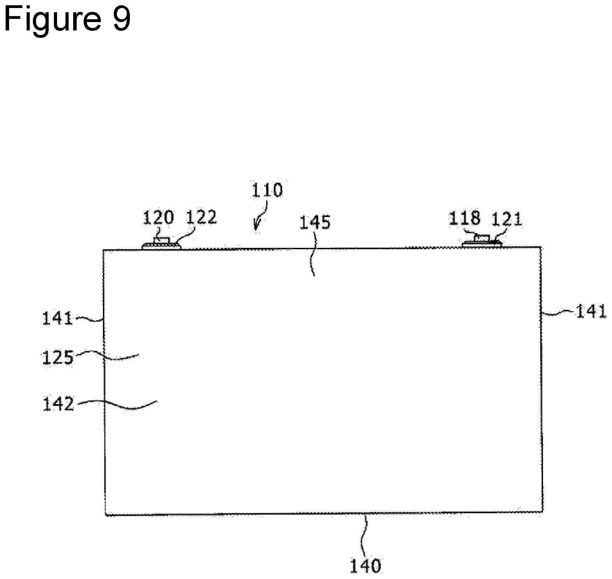

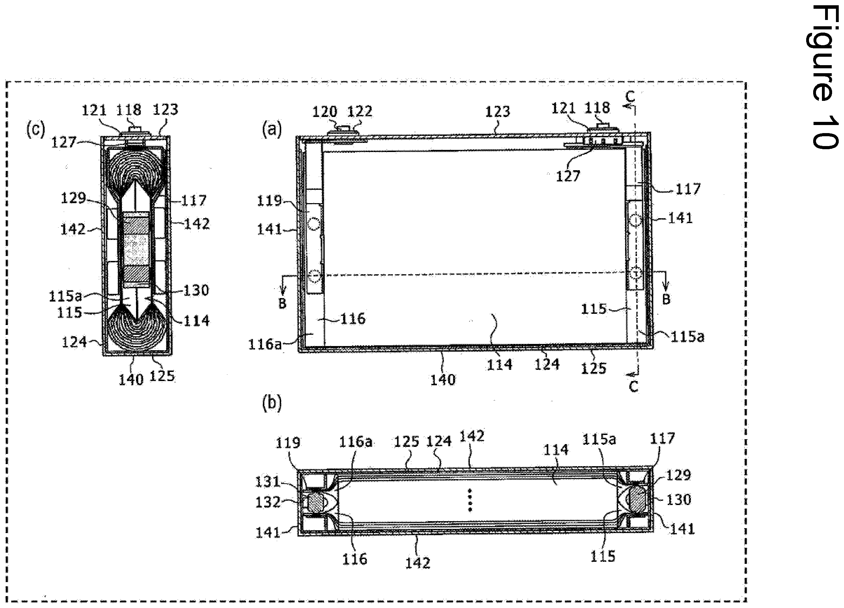

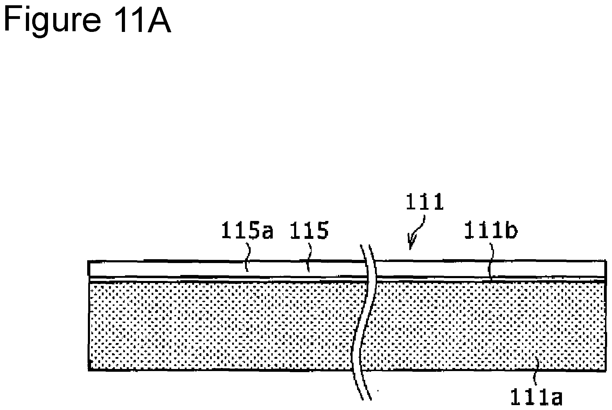

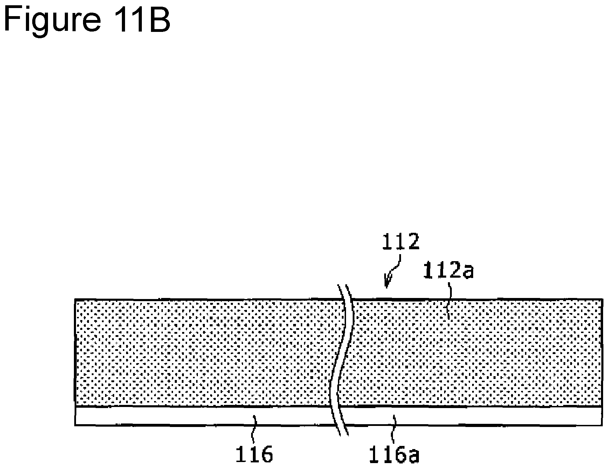

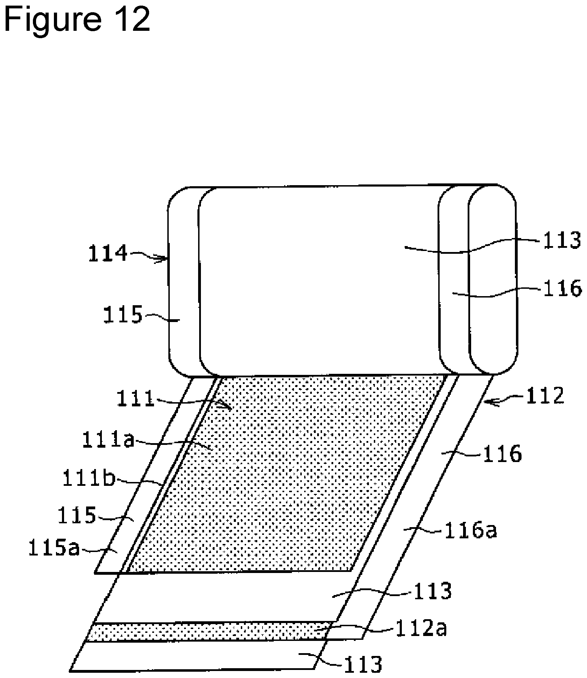

In the above, the case in which the secondary battery includes the stacked electrode assembly has been described heretofore. Next, a case in which the secondary battery includes a wound electrode assembly is described. FIG. 8 is a plan view of a wound rectangular secondary battery 110, and FIG. 9 is a front view of the rectangular secondary battery 110. FIG. 10(a) is a cross-sectional view taken along line A-A of FIG. 8, FIG. 10(b) is a cross-sectional view taken along line B-B of FIG. 10(a), and FIG. 10(c) is a cross-sectional view taken along line C-C of FIG. 10(a). FIG. 11A is a plan view of a positive electrode included in the rectangular secondary battery 110, FIG. 11B is a plan view of a negative electrode included in the rectangular secondary battery 110. FIG. 12 is an exploded perspective view by exploding the winding end side of a flat wound electrode assembly included in the rectangular secondary battery 110. The same materials as those used for the corresponding components of the stacked secondary battery 10 described above can be used for each of the components of the wound rectangular secondary battery 110. In the following description, therefore, the materials of those members will be described briefly or omitted.

As illustrated in FIGS. 8 to 10 and 12, the rectangular secondary battery (hereinafter will simply be referred to as the secondary battery) 110 includes an outer can (rectangular outer can) 125 (see FIGS. 8 to 10), a sealing plate 123 (see FIG. 8), and a flat wound electrode assembly 114 (see FIGS. 9(a) and 12). The outer can 125 is made of, for example, aluminum or aluminum alloy, with its one end in the height direction being opened. As illustrated in FIG. 9, the outer can 125 has a bottom 140, a pair of first side surfaces 141, and a pair of second side surfaces 142, with the second side surfaces 142 being larger than the first side surfaces 141. As illustrated in FIG. 10(a), the sealing plate 123 is fitted to the opening of the outer can 125. The fitted portion of the sealing plate 123 and the outer can 125 is bonded to form the rectangular battery case 145. The same materials as the materials of the corresponding members in the stacked rectangular secondary battery 10 can be used as the materials of each member of the wound secondary battery 110. Therefore, in the following description of the wound secondary battery 110, the materials of each member will be described briefly or omitted.

As illustrated in FIG. 12, the wound electrode assembly 114 has a structure in which a positive electrode 111 and a negative electrode 112 are wound with being insulated from each other by a separator 113. The outermost side of the wound electrode assembly 114 is covered with the separator 113, and the negative electrode 112 is placed on the outer periphery side of the positive electrode 111. As illustrated in FIG. 11A, the positive electrode 111 is composed of a belt-like positive electrode core body 115 made of aluminum or aluminum alloy foil having a thickness of from 10 µm to 20 µm by applying a positive electrode mixture slurry to both sides of the positive electrode core body 115, followed by drying, compressing, and cutting it to a predetermined belt-like size. The positive electrode mixture slurry includes the positive electrode active material, the conductive material, the binder material, and the like. At this time, a positive electrode core body exposed portion 115a with no positive electrode mixture layer 111a formed on both sides along the longitudinal direction is formed at one end of the width direction. On the surface of at least one side surface of the positive electrode core body exposed portion 115a, for example, it is preferable that a positive electrode protective layer 111b may be formed along the longitudinal direction of the positive electrode core body exposed portion 115a, adjacent to the positive electrode mixture layer 111a. The positive electrode protective layer 111b includes insulating inorganic particles and a binder material. The positive electrode protective layer 111b is less conductive than the positive electrode mixture layer 111a. Providing the positive electrode protective layer 111b can prevent short-circuit between the negative electrode mixture layer 112a and the positive electrode core body 115 caused by foreign substances or the like. The positive electrode protective layer 111b particles may include conductive inorganic particles. Alternatively, the positive electrode protective layer 111b may not be provided.

On the other hand, as illustrated in FIG. 11B, the negative electrode 112 is composed of a belt-like negative electrode core body 116 made of copper or copper alloy foil having a thickness of from 5 µm to 15 µm by applying a negative electrode mixture slurry to both sides of the negative electrode core body 116, followed by drying, compressing, and cutting it to a predetermined belt-like size. The negative electrode mixture slurry includes the negative electrode active material, the binder material, and the like. At this time, a negative electrode core body exposed portion 116a with no negative electrode mixture layer 112a formed on both sides along the longitudinal direction is formed. The positive electrode core body exposed portion 115a and the negative electrode core body exposed portion 116a may be formed along both ends of the positive electrode 111 and the negative electrode 112, respectively, in the width direction.

As illustrated in FIG. 12, the positive electrode 111 and the negative electrode 112 are displaced from each other in the width direction of the wound electrode assembly 114 (the width direction of the positive electrode 111 and the negative electrode 112) to prevent the positive electrode core body exposed portion 115a from overlapping the negative electrode mixture layer 112a and the negative electrode core body 116a from overlapping the positive electrode mixture layer 111a. Then, the positive electrode 111 and the negative electrode 112 are wound with being insulated from each other across the separator 113 which is coated with the adhesive having an approximately constant area density on at least one side surface in the thickness direction. The formed wound assembly is placed between a pair of hot plates and formed into a flat shape to fabricate the flat wound electrode assembly 114. The wound electrode assembly 114 includes a plurality of positive electrode core body exposed portions 115a stacked at one end and a plurality of negative electrode core body exposed portions 116a stacked at the other end in the direction in which the winding axis extends (which corresponds to the width direction when the belt-like positive electrode 111, the belt-like negative electrode 112, and the belt-like separator 113 are unrolled into a rectangular shape). As the separator 113, a polyolefin porous film is preferably used. The width of the separator 113 is preferably wide enough to cover the positive electrode mixture layer 111a and the positive electrode protective layer 111b, and larger than the width of the negative electrode mixture layer 112a.

As will be described in detail later, the plurality of stacked positive electrode core body exposed portions 115a is electrically connected to the positive electrode terminal 118 via a positive electrode current collector 117 (see FIG. 10(a)), and the plurality of negative electrode core body exposed portions 116a is electrically connected to the negative electrode terminal 120 via a negative electrode current collector 119 (see FIG. 10(a)). Although not described in detail, it is preferable to provide a current shut-off mechanism 127 which is activated when the gas pressure inside the battery case 145 exceeds a predetermined value between the positive electrode current collector 117 and the positive electrode terminal 118, as illustrated in FIG. 10(a),.

As illustrated in FIGS. 8, 9 and 10(a), the positive electrode terminal 118 and the negative electrode terminal 120 are each fixed to the sealing plate 123 via insulating members 121 and 122, respectively. The sealing plate 123 includes a gas discharge valve 128 which is opened when the gas pressure inside the battery case 145 becomes higher than the operating pressure of the current shut-off mechanism 127. The positive electrode current collector 117, the positive electrode terminal 118, and the sealing plate 123 are made of aluminum or aluminum alloy, while the negative electrode current collector 119 and the negative electrode terminal 120 are each made of copper or copper alloy. As illustrated in FIG. 10(c), the flat wound electrode assembly 114 is inserted into the outer can 125 which is open on one side, via an insulating sheet (resin sheet) 124 disposed around the electrode assembly except for the sealing plate 123 side.

As illustrated in FIGS. 10(b) and 10(c), on the positive electrode 111 side, the plurality of wound and stacked positive electrode core body exposed portions 115a is converged in the center of the thickness direction and further divided into two parts and converged, and a positive electrode intermediate member 130 is placed between the two parts. The positive electrode intermediate member 130 is made of a resin material, and at least one or, for example, two positive electrode conductive members 129 are held in the positive electrode intermediate member 130. The positive electrode conductive member 129 used has, for example, a cylindrical shape, and cone-shaped projections acting as projections are formed at both ends facing the stacked positive electrode core body exposed portions 115a.

Similarly, on the negative electrode 112 side, the plurality of wound and stacked negative electrode core body exposed portions 116a is converged in the center of the thickness direction and further divided into two parts and converged. Then, a negative electrode intermediate member 132 is placed between the two parts. The negative electrode intermediate member 132 is made of a resin material, and at least one or, for example, two negative electrode conductive members 131 are held in the negative electrode intermediate member 132. The negative electrode conductive members 131 has, for example, a cylindrical shape with cone-shaped portions acting as projections formed at both ends facing the stacked negative electrode core body exposed portions 116a.

The positive electrode conductive member 129 and the converged positive electrode core body exposed portions 115a located on both sides in the extending direction of the positive electrode conductive member 129 are bonded and electrically connected, while the converged positive electrode core body exposed portions 115a and the positive electrode current collector 117 located on the outer side in the depth direction of the battery case 145 are also bonded and electrically connected. Similarly, the negative electrode conductive member 131 and the converged negative electrode core body exposed portions 116a located on both sides in the extending direction of the negative electrode conductive member 131 are bonded and electrically connected, while the converged negative electrode core body exposed portions 116a and the negative electrode current collector 119 located on the outer side in the depth direction of the battery case 145 are also bonded and electrically connected. The end of the positive electrode current collector 117 opposite the positive electrode core body exposed portion 115a side is electrically connected to the positive electrode terminal 118, and the end of the negative electrode current collector 119 opposite the negative electrode core body exposed portion 116a side is electrically connected to the negative electrode terminal 120. As a result, the positive electrode core body exposed portion 115a is electrically connected to the positive electrode terminal 118, and the negative electrode core body exposed portion 116a is electrically connected to the negative electrode terminal 120.

The wound electrode assembly 114, the positive electrode and negative electrode intermediate members 130, 132, and the positive electrode and negative electrode conductive members 129, 131 are bonded to form an integrated structure. The positive electrode conductive member 129 is preferably made of aluminum or aluminum alloy, which is the same material as used in the positive electrode core body 115. The negative electrode conductive member 131 is preferably made of copper or copper alloy, which is the same material as used in the negative electrode core body 116. The shape of the positive electrode conductive member 129 and the negative electrode conductive member 131 may be the same or different.

Resistance welding, laser welding, or ultrasonic welding may be used to connect the positive electrode core body exposed portion 115a and the positive electrode current collector 117 and to connect the negative electrode core body exposed portion 116a and the negative electrode current collector 119. The positive electrode intermediate member 130 and the negative electrode intermediate member 132 may not be used.

As illustrated in FIG. 8, the sealing plate 123 has the electrolyte injection hole 126. The wound electrode assembly 114 to which the positive electrode current collector 117, the negative electrode current collector 119, the sealing plate 123, and the like are attached is disposed in the outer can 125. At this time, it is preferable to insert the wound electrode assembly 114 into the outer can 125 in which the insulating sheet 124 formed into a box or bag shape is disposed in the outer can 125. The fitted portion of the sealing plate 123 and the outer can 125 is welded by laser, and then the nonaqueous electrolyte is injected from the electrolyte injection hole 126. After that, the electrolyte injection hole 126 is sealed to complete fabrication of the secondary battery 110. The electrolyte injection hole 126 may be sealed, for example, with blind rivets or by welding.

The above description has been given for the case where the wound electrode assembly 114 is disposed with its winding axis extending parallel to the bottom of the outer can 125, but it is also possible to provide the structure in which the wound electrode assembly 114 is disposed with its winding axis extending perpendicular to the bottom of the outer can 125.

Although the example of the wound secondary battery 110 has been described, there is also an issue of difficulty of permeation of the electrolyte (liquid electrolyte) into the central cavity side of the battery in any wound secondary battery 110 including the wound secondary battery 110 described above.

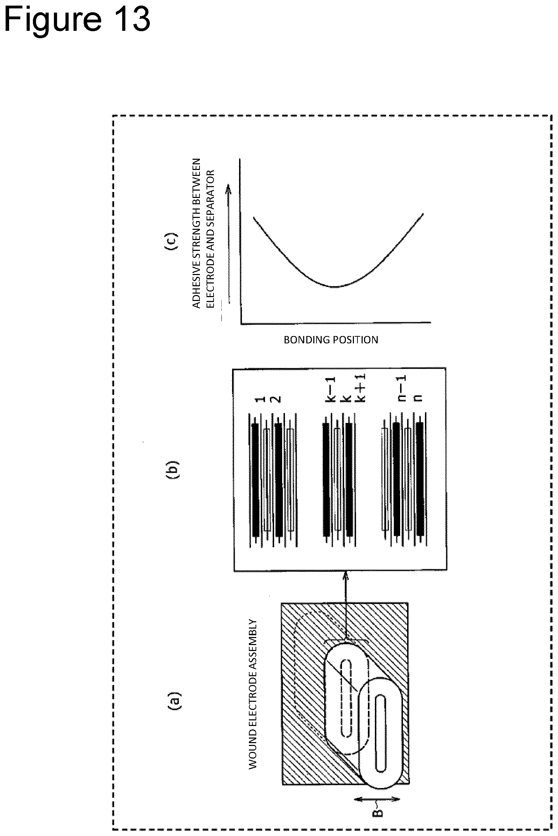

In other words, as illustrated in FIGS. 6 and 13, the stacking direction A in the stacked electrode assembly 11 (which coincides with the pressing direction by the hot plate) corresponds to the pressing direction B by the hot plate in the wound electrode assembly (wound electrode assembly) 114. When the wound electrode assembly 114 is pressed into a flat shape by the heat pressing process to melt the adhesive, the temperature on the inner circumference side is lower than that on the outer circumference side. In other words, the outer side in the stacking direction of the stacked electrode assembly 11 corresponds to the outer circumference side of the wound electrode assembly 114, and the inner side (center side) in the stacking direction of the stacked electrode assembly 11 corresponds to the inner circumference side (cavity side) of the wound electrode assembly 114. Therefore, by fabricating the wound electrode assembly 114 to have the structure described below, it is possible to improve the power generation performance, durability, and mass productivity of the secondary battery 110 using such wound electrode assembly 114 in the same way as the stacked electrode assembly 11.

Specifically, the secondary battery 110 includes the wound assembly formed by winding at least five times the belt-like positive electrode 111, which includes the positive electrode core body 115 and the positive electrode active material placed on the positive electrode core body 115, and the belt-like negative electrode 112, which includes the negative electrode core body 116 and the negative electrode active material placed on the negative electrode core body 116, with the belt-like separator 113 interposed therebetween. In the secondary battery 110, the wound assembly includes the adhesive disposed between at least one side surface in the thickness direction of the separator 113 and at least one electrode (first electrode). Assuming that the adhesive strength between the at least one electrode (first electrode) located at the outermost circumference and the separator is A0 [N/m], and the adhesive strength between the at least one electrode (first electrode) located at the innermost circumference and the separator is A0 [N/m], A1/A0 is at least 0.1 and less than 0.9.

Therefore, the secondary battery 110 has good power generation performance, durability, and mass productivity.

The wound assembly may have the flat shape, the length of the wound assembly in the height direction of the battery 110 may be at least 10 cm, and the length of the wound assembly in the horizontal direction of the battery 110 may be at least 9 cm.

The liquid flowability (liquid permeability) of the electrolyte to the inner circumferential side of the wound assembly decreases as the capacity of the secondary battery increases.

The secondary battery 110 of the present structure is a large-capacity battery having the thickness of the wound assembly of at least 10 cm and the peripheral length of the outermost circumference of at least 9 cm. Therefore, the excellent liquid flowability of the electrolyte, which is one of the main effects of the technology of the present disclosure, can be achieved, and the generation performance and durability of the secondary battery 110 can be significantly improved.

It is also possible to include the second adhesive disposed between the other side surface in the thickness direction in the separator 113 and the other electrode and, when the adhesive strength between the other electrode located at the outermost circumference and the separator is A2 [N/m], and the adhesive strength between the other electrode located at the innermost circumference and the separator is A3 [N/m], A3/A2 may be at least 0.1 and less than 0.9.

With the present structure, it is also possible to increase the liquid flowability (liquid permeability) between the other electrode and the separator 113 at the inner circumference of the wound assembly. This further improves the power generation performance, durability, and mass productivity of the secondary battery 110.

At least one side surface of the separator 113 on which the adhesive is placed may be included in the porous substrate (for example, polyolefin substrate) having ion permeability and insulating characteristic.

With the present structure, it is possible to increase the adhesive strength acting between the separator 113 and at least one electrode (at least one of the positive electrode and the negative electrode), so that the misalignment of the separator 113 relative to the electrodes can be largely suppressed.

The adhesive may also be applied to the other side surface of the separator 113 in the thickness direction, and the other side surface of the separator 113 may be included in the porous substrate (for example, polyolefin substrate) having ion permeability and insulating characteristic.

With the present structure, it is possible to increase the adhesive strength acting between the separator 113 and also increase the adhesive strength acting between the positive electrode 111 and acting between the separator 113 and the negative electrode 112.

The adhesive may be applied to at least one side surface in the thickness direction of the separator 113 to have an approximately constant area density. The area density of the bonded portion of the adhesive may be changed for each layer of the wound assembly. Specifically, the area density of the bonded portion may be changed to be smaller on the inner layers than on the outer layers.

With the present structure, the productivity of secondary batteries can be significantly improved.

In manufacturing the secondary battery 110 having the wound electrode assembly 114 of the present disclosure, the wound electrode assembly 114 may be manufactured by welding at least a portion of the adhesive in the heat pressing process. The present structure facilitates fabrication of the secondary battery 110 including the wound electrode assembly 114 of the present invention.

### REFERENCE SIGNS LIST

10, 110 Secondary battery
11 Electrode assembly
11A, 11B Electrode group
20, 111 Positive electrode
115 Positive electrode core body
30, 112 Negative electrode
116 Negative electrode core body
40, 113 Separator
40a Base material
40b Heat resistant layer
50 Adhesive
50a, 50b Bonded portion of adhesive
111a Positive electrode mixture layer
112a Negative electrode mixture layer
114 Wound electrode assembly

## Claims

1. A secondary battery (10), comprising:
a plurality of first electrodes (30) each including a first electrode core body and a first electrode active material disposed on the first electrode core body;
a plurality of second electrodes (20) each including a second electrode core body and a second electrode active material disposed on the second electrode core body;
at least one separator (40); and
an adhesive (50) disposed between at least one side surface in a thickness direction of the separator (40) and the first electrode (30), wherein
the plurality of the first electrodes (30) and the plurality of the second electrodes (20) are alternately stacked via the separator (40),
at least ten first electrodes (30) are included in a stacked body (11A,11B) including the plurality of the first electrodes (30) and the plurality of the second electrodes, (20) and
when an adhesive strength between the outermost first electrode (30) and the separator (40) is A0 [N/m] , and an adhesive strength between the first electrode (30) located in a center in a stacking direction of the stacked body (11A,11B) and the separator (40) is A1 [N/m], A1/A0 is at least 0.1 and less than 0.9.

2. A secondary battery (110) , comprising:
a wound assembly formed by winding at least five times, via a belt-like separator (113), a belt-like first electrode (112) including a first electrode core body (116) and a first electrode active material disposed on the first electrode core body (116) , and a belt-like second electrode (111) including a second electrode core body (115) and a second electrode active material disposed on the second electrode core body (115), wherein
the wound assembly includes an adhesive disposed between at least one side surface of the separator (113) in a thickness direction and the first electrode (112), and
when an adhesive strength between the first electrode (112) located at the outermost circumference and the separator (113) is A0 [N/m] , and an adhesive strength between the first electrode (112) located at the innermost circumference and the separator (113) is A1 [N/m], A1/A0 is at least 0.1 and less than 0.9.

3. The secondary battery (10) according to claim 1, wherein
a longer side of the first electrode (30) is at least 10 cm, and an area of one side surface of the first electrode (30) in the thickness direction is at least 90 cm².

4. The secondary battery (10) according to claims 1 or 3, further comprising:
a second adhesive (50) disposed between the other side surface of the separator (40) in the thickness direction and the second electrode (20), wherein
when an adhesive strength between the outermost second electrode (20) and the separator (40) is A2 [N/m] , and an adhesive strength between the second electrode (20) located in a center in the stacking direction of the stacked body (11A.11B) and the separator (40) is A3 [N/m], A2/A3 is at least 0.1 and less than 0.9.

5. The secondary battery (110) according to claim 2, wherein:
the wound assembly has a flat shape, and
a length of the wound assembly in a height direction of the secondary battery (110) is at least 10 cm, and a length of the wound assembly in a horizontal direction of the secondary battery (110) is at least 9 cm.

6. The secondary battery (110) according to claim 2 or 5, further comprising:
a second adhesive disposed between the other side surface in the thickness direction of the separator (113) and the second electrode (111), wherein
when an adhesive strength between the second electrode (111) located at the outermost circumference and the separator (113) is A2 [N/m] , and an adhesive strength between the second electrode (111) located at the innermost circumference and the separator (113) is A3 [N/m], A3/A2 is at least 0.1 and less than 0.9.

7. The secondary battery (10,110) according to any one of claims 1 to 6, wherein
the one side surface is included in a porous substrate having ionic permeability and insulating characteristic.

8. The secondary battery (10,110) according to claim 4 or 6, wherein
the other side surface is included in a porous substrate having ion permeable and insulating characteristic.

9. The secondary battery (10) according to claim 1, 3, or 4, wherein
the adhesive (50) is applied to the one side surface of the separator (40) with an approximately constant area density, and
the area density of a bonded portion (50a,50b) of the adhesive (50) changes in the stacking direction.

10. The secondary battery (110) according to claim 2, 5, or 6, wherein
the adhesive is applied to the one side surface of the separator (113) with an approximately constant area density, and
the area density of a bonded portion of the adhesive changes layer by layer of the wound assembly.

11. The secondary battery (10) according to claim 1, 3, 4, or 9, wherein
the separator (40) is folded in a zigzag.

12. The secondary battery (10,110) according to any one of claims 1 to 11, wherein
the secondary battery (10,110) is a nonaqueous electrolyte secondary battery.

13. A method for manufacturing a secondary battery to manufacture the secondary battery (10,110) according to any one of claims 1 to 12, comprising:
welding at least a portion of an adhesive (50) by heat pressing.

## Patentansprüche

1. Sekundärbatterie (10), umfassend:
eine Vielzahl von ersten Elektroden (30), die jeweils einen ersten Elektrodenkernkörper und ein erstes Elektrodenaktivmaterial umfassen, das auf dem ersten Elektrodenkernkörper angeordnet ist;
eine Vielzahl von zweiten Elektroden (20), die jeweils einen zweiten Elektrodenkernkörper und ein zweites Elektrodenaktivmaterial umfassen, das auf dem zweiten Elektrodenkernkörper angeordnet ist;
mindestens einen Separator (40); und
ein Haftmittel (50), das zwischen mindestens einer Seitenoberfläche in einer Dickenrichtung des Separators (40) und der ersten Elektrode (30) angeordnet ist, wobei
die Vielzahl von den ersten Elektroden (30) und die Vielzahl von den zweiten Elektroden (20) abwechselnd über den Separator (40) gestapelt sind,
mindestens zehn erste Elektroden (30) in einem gestapelten Körper (11A, 11B) enthalten sind, der die Vielzahl von den ersten Elektroden (30) und die Vielzahl von den zweiten Elektroden (20) umfasst, und
wenn eine Haftfestigkeit zwischen der äußersten ersten Elektrode (30) und dem Separator (40) A0 [N/m] beträgt, und eine Haftfestigkeit zwischen der ersten Elektrode (30), die sich in einer Mitte in einer Stapelungsrichtung des gestapelten Körpers (11A, 11B) befindet, und dem Separator (40) A1 [N/m] beträgt, A1/A0 mindestens gleich 0,1 und kleiner als 0,9 ist.

2. Sekundärbatterie (110), umfassend:
eine gewickelte Anordnung, die durch mindestens fünffaches Wickeln, über einen gürtelartigen Separator (113), einer gürtelartigen ersten Elektrode (112), die einen ersten Elektrodenkernkörper (116) und ein erstes Elektrodenaktivmaterial umfasst, das auf dem ersten Elektrodenkernkörper (116) angeordnet ist, und einer gürtelartigen zweiten Elektrode (111) gebildet ist, die einen zweiten Elektrodenkernkörper (115) und ein zweites Elektrodenaktivmaterial umfasst, das auf dem zweiten Elektrodenkernkörper (115) angeordnet ist, wobei
die gewickelte Anordnung ein Haftmittel umfasst, das zwischen mindestens einer Seitenoberfläche des Separators (113) in einer Dickenrichtung und der ersten Elektrode (112) angeordnet ist, und
wenn eine Haftfestigkeit zwischen der ersten Elektrode (112), die sich am äußersten Umfang befindet, und dem Separator (113) A0 [N/m] beträgt, und eine Haftfestigkeit zwischen der ersten Elektrode (112), die sich am innersten Umfang befindet, und dem Separator (113) A1 [N/m] beträgt, A1/A0 mindestens gleich 0,1 und kleiner als 0,9 ist.

3. Sekundärbatterie (10) nach Anspruch 1, wobei eine längere Seite der ersten Elektrode (30) mindestens 10 cm beträgt und ein Flächeninhalt einer Seitenoberfläche der ersten Elektrode (30) in der Dickenrichtung mindestens 90 cm² beträgt.

4. Sekundärbatterie (10) nach Anspruch 1 oder 3, ferner umfassend:
ein zweites Haftmittel (50), das zwischen der anderen Seitenoberfläche des Separators (40) in der Dickenrichtung und der zweiten Elektrode (20) angeordnet ist, wobei
wenn eine Haftfestigkeit zwischen der äußersten zweiten Elektrode (20) und dem Separator (40) A2 [N/m] beträgt und eine Haftfestigkeit zwischen der zweiten Elektrode (20), die sich in einer Mitte in der Stapelungsrichtung des gestapelten Körpers (11A, 11B) befindet, und dem Separator (40) A3 [N/m] beträgt, A2/A3 mindestens gleich 0,1 und kleiner als 0,9 ist.

5. Sekundärbatterie (110) nach Anspruch 2, wobei:
die gewickelte Anordnung eine flache Form aufweist, und
eine Länge der gewickelten Anordnung in einer Höhenrichtung der Sekundärbatterie (110) mindesten 10 cm beträgt und eine Länge der gewickelten Anordnung in einer horizontalen Richtung der Sekundärbatterie (110) mindestens 9 cm beträgt.

6. Sekundärbatterie (110) nach Anspruch 2 oder 5, ferner umfassend:
ein zweites Haftmittel, das zwischen der anderen Seitenoberfläche in der Dickenrichtung des Separators (113) und der zweiten Elektrode (111) angeordnet ist, wobei
wenn eine Haftfestigkeit zwischen der zweiten Elektrode (111), die sich am äußersten Umfang befindet, und dem Separator (113) A2 [N/m] beträgt, und eine Haftfestigkeit zwischen der zweiten Elektrode (111), die sich am innersten Umfang befindet, und dem Separator (113) A3 [N/m] beträgt, A3/A2 mindestens gleich 0,1 und kleiner als 0,9 ist.

7. Sekundärbatterie (10, 110) nach einem der Ansprüche 1 bis 6, wobei
die eine Seitenoberfläche in einem porösen Substrat enthalten ist, das Ionendurchlässigkeit und isolierende Eigenschaften aufweist.

8. Sekundärbatterie (10, 110) nach Anspruch 4 oder 6, wobei
die andere Seitenoberfläche in einem porösen Substrat enthalten ist, das Ionendurchlässigkeit und isolierende Eigenschaften aufweist.

9. Sekundärbatterie (10) nach Anspruch 1, 3 oder 4, wobei das Haftmittel (50) auf die eine Seitenoberfläche des Separators (40) mit einer ungefähr konstanten Flächendichte aufgebracht ist, und
die Flächendichte eines gebundenen Abschnitts (50a, 50b) des Haftmittels (50) sich in der Stapelungsrichtung ändert.

10. Sekundärbatterie (110) nach Anspruch 2, 5 oder 6, wobei das Haftmittel auf die eine Seitenoberfläche des Separators (113) mit einer ungefähr konstanten Flächendichte aufgebracht ist, und
die Flächendichte eines gebundenen Abschnitts des Haftmittels sich Schicht für Schicht der gewundenen Anordnung ändert.

11. Sekundärbatterie (10) nach Anspruch 1, 3, 4, oder 9, wobei
der Separator (40) zickzackförmig gefaltet ist.

12. Sekundärbatterie (10, 110) nach einem der Ansprüche 1 bis 11, wobei
die Sekundärbatterie (10, 110) eine Sekundärbatterie mit wasserfreiem Elektrolyt ist.

13. Verfahren zur Herstellung einer Sekundärbatterie zur Herstellung der Sekundärbatterie (10, 110) nach einem der Ansprüche 1 bis 12, umfassend:
Schweißen mindestens eines Abschnitts eines Haftmittels (50) durch Heißpressen.

## Revendications

1. Batterie secondaire (10) comprenant :
une pluralité de premières électrodes (30) comprenant chacune un premier corps de noyau d'électrode et un premier matériau actif d'électrode disposé sur le premier corps de noyau d'électrode ;
une pluralité de secondes électrodes (20) comprenant chacune un second corps de noyau d'électrode et un second matériau actif d'électrode disposé sur le second corps de noyau d'électrode ;
au moins un séparateur (40) ; et
un adhésif (50) disposé entre au moins une surface latérale dans une direction d'épaisseur du séparateur (40) et la première électrode (30), dans laquelle :
la pluralité de premières électrodes (30) et la pluralité de secondes électrodes (20) sont empilées de manière alternée via le séparateur (40),
au moins dix premières électrodes (30) sont incluses dans un corps empilé (11A, 11B) comprenant la pluralité de premières électrodes (30) et la pluralité de secondes électrodes (20), et
lorsqu'une force adhésive entre la première électrode située le plus à l'extérieur (30) et le séparateur (40) est A0 [N/m], et une force adhésive entre la première électrode (30) située dans un centre dans une direction d'empilement du corps empilé (11A, 11B) et le séparateur (40) est A1 [N/m], A1/A0 est au moins de 0,1 et inférieur à 0,9.

2. Batterie secondaire (110) comprenant :
un ensemble enroulé formé en enroulant au moins cinq fois, via un séparateur en forme de courroie (113), une première électrode en forme de courroie (112) comprenant un premier corps de noyau d'électrode (116) et un premier matériau actif d'électrode disposé sur le premier corps de noyau d'électrode (116), et une seconde électrode en forme de courroie (111) comprenant un second corps de noyau d'électrode (115) et un second matériau actif d'électrode disposé sur le second corps de noyau d'électrode (115), dans laquelle :
l'ensemble enroulé comprend un adhésif disposé entre au moins une surface latérale du séparateur (113) dans une direction d'épaisseur et la première électrode (112), et
lorsqu'une force adhésive entre la première électrode (112) positionnée au niveau de la circonférence située le plus à l'extérieur et le séparateur (113) est A0 [N/m], et qu'une force adhésive entre la première électrode (112) positionnée au niveau de la circonférence située le plus à l'intérieur et le séparateur (113) est A1 [N/m], A1/A0 est d'au moins 0,1 et inférieur à 0,9.

3. Batterie secondaire (10) selon la revendication 1, dans laquelle :
un côté plus long de la première électrode (30) est d'au moins 10 cm et une superficie d'une surface latérale de la première électrode (30) dans la direction d'épaisseur est d'au moins 90 cm².

4. Batterie secondaire (10) selon les revendications 1 ou 3, comprenant en outre :
un second adhésif (50) disposé entre l'autre surface latérale du séparateur (40) dans la direction d'épaisseur et la seconde électrode (20), dans laquelle :
lorsqu'une force adhésive entre la seconde électrode située le plus à l'extérieur (20) et le séparateur (40) est A2 [N/m], et qu'une force adhésive entre la seconde électrode (20) positionnée dans un centre dans la direction d'empilement du corps empilé (11A, 11B) et le séparateur (40) est A3 [N/m], A2/A3 est d'au moins 0,1 et inférieur à 0,9.

5. Batterie secondaire (110) selon la revendication 2, dans laquelle :
l'ensemble enroulé a une forme plate, et
une longueur de l'ensemble enroulé dans une direction de hauteur de la batterie secondaire (110) est d'au moins 10 cm, et une longueur de l'ensemble enroulé dans une direction horizontale de la batterie secondaire (110) est d'au moins 9 cm.

6. Batterie secondaire (110) selon la revendication 2 ou 5, comprenant en outre :
un second adhésif disposé entre l'autre surface latérale dans la direction d'épaisseur du séparateur (113) et la seconde électrode (111), dans laquelle :
lorsqu'une force adhésive entre la seconde électrode (111) positionnée au niveau de la circonférence située le plus à l'extérieur et le séparateur (113) est A2 [N/m], et qu'une force adhésive entre la seconde électrode (111) positionnée au niveau de la circonférence située le plus à l'intérieur et le séparateur (113) est A3 [N/m], A3/A2 est d'au moins 0,1 et inférieur à 0,9.

7. Batterie secondaire (10, 110) selon l'une quelconque des revendications 1 à 6, dans laquelle :
ladite une surface latérale est incluse dans un substrat poreux ayant une perméabilité ionique et une caractéristique isolante.

8. Batterie secondaire (10, 110) selon la revendication 4 ou 6, dans laquelle :
l'autre surface latérale est incluse dans un substrat poreux ayant une perméabilité ionique et une caractéristique isolante.

9. Batterie secondaire (10) selon la revendication 1, 3 ou 4, dans laquelle :
l'adhésif (50) est appliqué sur la une surface latérale du séparateur (40) avec une densité de surface approximativement constante, et
la densité de surface d'une partie collée (50a, 50b) de l'adhésif (50) change dans la direction d'empilement.

10. Batterie secondaire (110) selon la revendication 2, 5 ou 6, dans laquelle :
l'adhésif est appliqué sur la une surface latérale du séparateur (113) avec une densité de surface approximativement constante, et
la densité de surface d'une partie collée de l'adhésif change couche par couche de l'ensemble enroulé.

11. Batterie secondaire (10) selon la revendication 1, 3, 4 ou 9, dans laquelle :
le séparateur (40) est plié en zigzag.

12. Batterie secondaire (10, 110) selon l'une quelconque des revendications 1 à 11, dans laquelle :
la batterie secondaire (10, 110) est une batterie secondaire à électrolyte non aqueux.

13. Procédé pour fabriquer une batterie secondaire pour fabriquer la batterie secondaire (10, 110) selon l'une quelconque des revendications 1 à 12, comprenant :
souder au moins une partie d'un adhésif (50) par pression thermique.
